# EUROPÄISCHE PATENTANMELDUNG

(11) **EP 4 733 876 A2**
(43) Veröffentlichungstag der Anmeldung: **29.04.2026**
(21) Anmeldenummer: 26163615.3
(22) Anmeldetag: 27.04.2018
(51) Int. Cl.: G05D 1/00, G06Q 10/00, G06Q 10/04

(54) **VERFAHREN FÜR DIE NAVIGATION EINES ROBOTERS**

(30) Priorität: 28.04.2017 DE 102017109219
(62) Teilanmeldung aus: 18720611.5
(71) Anmelder: Papst Licensing GmbH & Co. KG, 78112 St. Georgen (DE)
(72) Erfinder: VOGEL, Reinhard, 4020 Linz (AT); ARTES, Harold, 4020 Linz (AT); SEETHALER, Dominik, 4020 Linz (AT)
(74) Vertreter: Westphal, Mussgnug & Partner, Patentanwälte mbB

(57) **Zusammenfassung**

Es wird ein Verfahren zur Steuerung wenigstens eines autonomen mobilen Roboters beschrieben, insbesondere eines Reinigungsroboters mit einer Reinigungseinheit zur Reinigung einer Bodenfläche. Der wenigstens eine Roboter ist dazu ausgebildet, eine Aufgabe zu einem vorgegebenen Zeitpunkt in einem Einsatzgebiet durchzuführen, wobei das Verfahren aufweist. Das Verfahren umfasst das Festlegen von allgemeinen Planungsvorgaben, wobei die allgemeinen Planungsvorgaben eine Aktivität des wenigstens einen Roboters betreffen; und das automatische Planen von Zeitpunkten, zu welchen eine Aufgabe durchgeführt werden soll, wobei die Planung unter Berücksichtigung der allgemeinen Planungsvorgaben erfolgt. Die allgemeinen Planungsvorgaben sehen vor, dass zu bestimmten vorgebbaren Zeitpunkten oder Zeiträumen keine Aufgaben automatisch geplant und durchgeführt werden.

## Beschreibung

### TECHNISCHES GEBIET

Die vorliegende Beschreibung betrifft das Gebiet der autonomen mobilen Roboter, insbesondere Verfahren zum Erstellen einer Arbeitsplanung für einen autonomen mobilen Roboter.

### HINTERGRUND

In den letzten Jahren finden autonome mobile Roboter, insbesondere Serviceroboter, zunehmend Verwendung in privaten Haushalten sowie auch im beruflichen Umfeld. Mögliche Anwendungen sind dabei beispielsweise Reinigungsroboter zum Saugen und/oder Wischen einer Bodenfläche oder Überwachungsroboter, um auf Patrouillenfahrten mögliche Gefahren wie Einbrecher oder Feuer zu detektieren. Weiterhin kann durch autonome mobile Roboter auch eine standort- und tätigkeitsunabhängige Kommunikation oder der Transport von Gegenständen ermöglicht werden.

Derartige autonome mobile Roboter weisen meist eine Karte der Umgebung auf, an welcher sie sich bei der Ausführung der entsprechenden Tätigkeiten orientieren können. Es sind Roboter bekannt, welche eine solche Karte zur gezielten Navigation unter Verwendung eines so genannten SLAM-Algorithmus (SLAM *= Simultaneous Localization and Mapping,* deutsch: simultane Lokalisierung und Kartenerstellung) erstellen. Die Karte und die Position des Roboters in der Karte werden hierbei mittels verschiedener Sensoren ermittelt. Derartige Sensoren können beispielsweise Laser-Range-Scanner, Kameras, Berührungssensoren, Odometer, Beschleunigungssensoren oder dergleichen aufweisen.

Eine durch den Roboter erstellte Karte kann dauerhaft gespeichert werden, so dass der Roboter die Karte für weitere nachfolgende Einsätze nutzen kann. So kann der Roboter nach dem Erstellen einer solchen Karte gezielt an einen Ort gesendet werden, um dort eine Aufgabe auszuführen (z.B. Wohnzimmer reinigen). Zudem kann der gesamte Arbeitsablauf des Roboters effizienter gestaltet werden, da der Roboter seine Arbeitsfahrt mit dem vorhandenen Vorwissen über sein Einsatzgebiet zumindest teilweise vorausplanen kann.

Bei derzeit verfügbaren mobilen autonomen Robotern ist jedoch nur eine eingeschränkte Planung der Arbeitsfahrt durch einen Nutzer möglich. Der Nutzer kann beispielsweise verschiedene Zeitpunkte festlegen, z.B. täglich um 9:00 Uhr, zu welchen der Roboter mit der Verrichtung einer Aufgabe beginnen soll. Genauere Vorgaben zu einer Arbeitsfahrt sind jedoch nicht möglich. Zudem ist die manuelle Programmierung des Roboters durch den Nutzer aufwendig und komplex und erfordert meist einen geübten Nutzer. Die Erfinder haben es sich zur Aufgabe gemacht, eine einfachere und intuitivere Planung für den Einsatz eines autonomen mobilen Roboters zu ermöglichen.

### ZUSAMMENFASSUNG

Die oben genannte Aufgabe wird durch ein Verfahren gemäß Anspruch 1 sowie durch einen Roboter gemäß Anspruch 15 gelöst. Verschiedene Ausführungsformen und Weiterentwicklungen der Erfindung sind Gegenstand der abhängigen Ansprüche.

Es wird ein Verfahren zur Steuerung wenigstens eines autonomen mobilen Roboters beschrieben, wobei der wenigstens eine Roboter dazu ausgebildet ist, anhand einer Karte eines Einsatzgebietes in diesem Einsatzgebiet zu navigieren und in dem Einsatzgebiet autonom wenigstens eine Aufgabe zu verrichten. Das Verfahren umfasst das Empfangen eines Arbeitsauftrags, wobei der Arbeitsauftrag Anweisungen zum Durchführen wenigstens einer Aufgabe in dem Einsatzgebiet enthält, das automatische Aufteilen des Arbeitsauftrages in wenigstens zwei Teilaufgaben, und das automatische Festlegen einer Reihenfolge, in welcher die Teilaufgaben von dem wenigstens einen Roboter abgearbeitet werden. Nach Abarbeitung aller Teilaufgaben ist der Arbeitsauftrag vollständig erledigt.

Ein weiteres hier beschriebenes Verfahren zur Steuerung eines autonomen mobilen Roboters, der dazu ausgebildet ist, wenigstens eine Aufgabe in einem Einsatzgebiet zu einer jeweils vorgegebenen Zeit autonom abzuarbeiten, umfasst das Eintragen wenigstens einer Aufgabe in einen Kalender zu der jeweils vorgegebenen Zeit und das Empfangen eines Arbeitsauftrags zur sofortigen Durchführung, wobei der Arbeitsauftrag Anweisungen zum sofortigen Durchführen wenigstens einer Aufgabe in dem Einsatzgebiet enthält. Das Verfahren umfasst weiter das Prüfen, ob der Arbeitsauftrag zur sofortigen Durchführung mit einer oder mehreren in dem Kalender eingetragenen Aufgaben zeitlich kollidiert, und wenn eine Kollision festgestellt wird, das Unterbrechen oder Unterlassen der wenigstens einen von der Kollision betroffenen Aufgabe und das Treffen einer Entscheidung, ob und wann die wenigstens eine von einer Kollision betroffene in den Kalender eingetragene Aufgabe weitergeführt oder wiederholt werden soll.

Es wird des Weiteren ein Verfahren zur Steuerung wenigstens eines autonomen mobilen Roboters beschrieben, der dazu ausgebildet ist, eine Aufgabe zu einem vorgegebenen Zeitpunkt in einem Einsatzgebiet durchzuführen. Das Verfahren umfasst das Festlegen von allgemeinen Planungsvorgaben, wobei die allgemeinen Planungsvorgaben eine Aktivität des wenigstens einen Roboters betreffen, und das automatische Planen von Zeitpunkten, zu welchen eine Aufgabe durchgeführt werden soll, wobei die Planung unter Berücksichtigung der allgemeinen Planungsvorgaben erfolgt. Die allgemeinen Planungsvorgaben sehen vor, dass zu bestimmten vorgebbaren Zeitpunkten oder Zeiträumen keine Aufgaben automatisch geplant und durchgeführt werden.

Es wird weiterhin ein Verfahren zum Programmieren eines autonomen mobilen Roboters beschrieben. Das Verfahren umfasst das Anzeigen eines zeitlichen Verlaufs von vom Roboter auszuführenden Aufgaben auf einer Mensch-Maschine-Schnittstelle, wobei der zeitliche Verlauf eine aktuelle Aufgabe des Roboters, zukünftig geplante Aufgaben des Roboters und vergangene Aufgaben des Roboters aufweist, und wobei die Aufgaben in Teilaufgaben unterteilt sein können. Das Verfahren umfasst weiter das Empfangen eines Nutzerkommandos, wobei das Nutzerkommando die Änderung wenigstens einer der zukünftig geplanten Aufgaben oder Teilaufgaben, oder das Hinzufügen neuer Aufgaben oder Teilaufgaben zur Folge hat.

Es wird weiterhin ein Verfahren zur Steuerung wenigstens eines autonomen mobilen Roboters beschrieben, wobei der wenigstens eine Roboter dazu ausgebildet ist, anhand einer Karte eines Einsatzgebietes in diesem Einsatzgebiet zu navigieren und in dem Einsatzgebiet gemäß den Einträgen in einem Kalender autonom wenigstens eine Aufgabe zu verrichten, wobei der Roboter einen Akku aufweist und weiterhin dazu ausgebildet ist den Akku an einer Basisstation aufzuladen, wobei zum Aufladen des Akkus eines von wenigstens zwei Akku-Ladeprogrammen gewählt werden kann, wobei die Ladegeschwindigkeit von dem gewählten Akku-Ladeprogramm abhängt. Das Verfahren umfasst das Wählen eines Akku-Ladeprogrammes in Anhängigkeit von den Einträgen in dem Kalender.

Es wird weiterhin ein Verfahren zur Steuerung wenigstens eines autonomen mobilen Roboters beschrieben, wobei der wenigstens eine Roboter dazu ausgebildet ist, anhand einer Karte eines Einsatzgebietes in diesem Einsatzgebiet zu navigieren und in dem Einsatzgebiet autonom wenigstens eine Aufgabe zu verrichten, wobei das Einsatzgebiet wenigstens ein Teilgebiet aufweist welches in der Karte gespeichert ist. Das Verfahren umfasst das Erkennen, ob eine Aufgabe in dem Teilgebiet nicht gemäß einer Vorgabe durchgeführt werden kann, entweder automatisch oder anhand einer Nutzereingabe, und das Erstellen einer neuen Aufteilung der Teilgebiete. Das Erstellen der neuen Aufteilung erfolgt derart, dass die Aufgabe in dem Teilgebiet gemäß der Vorgaben verrichtet werden kann.

Es wird weiterhin ein Verfahren zur Steuerung eines autonomen mobilen Roboters beschrieben, wobei der wenigstens eine Roboter dazu ausgebildet ist, anhand einer Karte eines Einsatzgebietes in diesem Einsatzgebiet zu navigieren und in dem Einsatzgebiet entsprechend einer Kalenderplanung autonom wenigstens eine Aufgabe zu verrichten, wobei das Einsatzgebiet wenigstens ein Teilgebiet aufweist, welches in der Karte gespeichert ist. Das Verfahren umfasst das manuelle Anpassen der Teilgebiete durch einen Nutzer und das automatische Anpassen der Kalenderplanung in Abhängigkeit von der vom Nutzer durchgeführten Anpassung der Teilgebiete.

Weitere Ausführungsbeispiele beziehen sich auf einen Roboter, der mit einer internen und/oder externen Datenverarbeitungsanlage verbunden ist, die dazu ausgebildet ist, ein Softwareprogramm auszuführen, das, wenn es von der Datenverarbeitungsanlage ausgeführt wird, den Roboter dazu veranlasst, die hier beschriebenen Verfahren auszuführen.

### KURZE BESCHREIBUNG DER ABBILDUNGEN

Die Erfindung wird nachfolgend anhand von den in den Abbildungen dargestellten Beispielen näher erläutert. Die Darstellungen sind nicht zwangsläufig maßstabsgetreu und die Erfindung beschränkt sich nicht nur auf die dargestellten Aspekte. Vielmehr wird Wert darauf gelegt, die der Erfindung zugrunde liegenden Prinzipien darzustellen.
Figur 1 zeigt beispielhaft ein Robotereinsatzgebiet und eine aktuelle Position des Roboters in dem Einsatzgebiet.
Figur 2 zeigt ein System mit einem autonomen mobilen Roboter, einer Mensch-Maschine-Schnittstelle und einem Server, die über eine Netzwerkverbindung kommunizieren können.
Figur 3 zeigt in einem Blockdiagramm den Aufbau eines autonomen mobilen Roboters und dessen Kommunikationsmöglichkeiten mit anderen (externen) Geräten.
Figur 4A zeigt eine Karte des Einsatzgebietes aus Figur 1 sowie eine mögliche Unterteilung dieses Einsatzgebietes.
Figur 4B zeigt eine auf der Aufteilung aus Figur 4A basierende topologische Karte.
Figur 5 zeigt ein Beispiel einer Kalenderansicht.
Figur 6 zeigt beispielhaft in einem Ablaufdiagram ein Verfahren zum Durchführen eines Arbeitsauftrages.
Figuren 7A-7E zeigen Beispiele für eine Aufteilung eines Arbeitsauftrages in teilaufgaben basierend auf der Karte des Einsatzgebietes aus Figur 1.
Figur 8 zeigt ein Beispiel für eine zeitliche Überlappung von Teilaufgaben.

### DETAILLIERTE BESCHREIBUNG

Ein autonomer mobiler Roboter führt als Serviceroboter im Allgemeinen selbsttätig eine oder mehrere Aufgaben (*tasks*) aus, wie zum Beispiel die Reinigung oder die Überwachung eines Robotereinsatzgebietes (*robot deployment area*) oder den Transport von Gegenständen innerhalb des Robotereinsatzgebietes. Das Robotereinsatzgebiet kann beispielsweise eine Wohnung, ein Haus oder eine Bürofläche sein. Die im Folgenden beschriebenen Ausführungsbeispiele betreffen zumeist Reinigungsroboter. Jedoch ist die vorliegende Erfindung nicht auf den Einsatz für Reinigungsroboter beschränkt, sondern ist auf alle denkbaren Anwendungen im Zusammenhang mit autonomen mobilen Robotern anwendbar, bei welchen einer oder mehrere autonome mobile Roboter eine oder mehrere Aufgaben in einem definierten Einsatzgebiet durchführen sollen, in welchem sie sich selbstständig mithilfe einer Karte bewegen (z.B. navigieren) können.

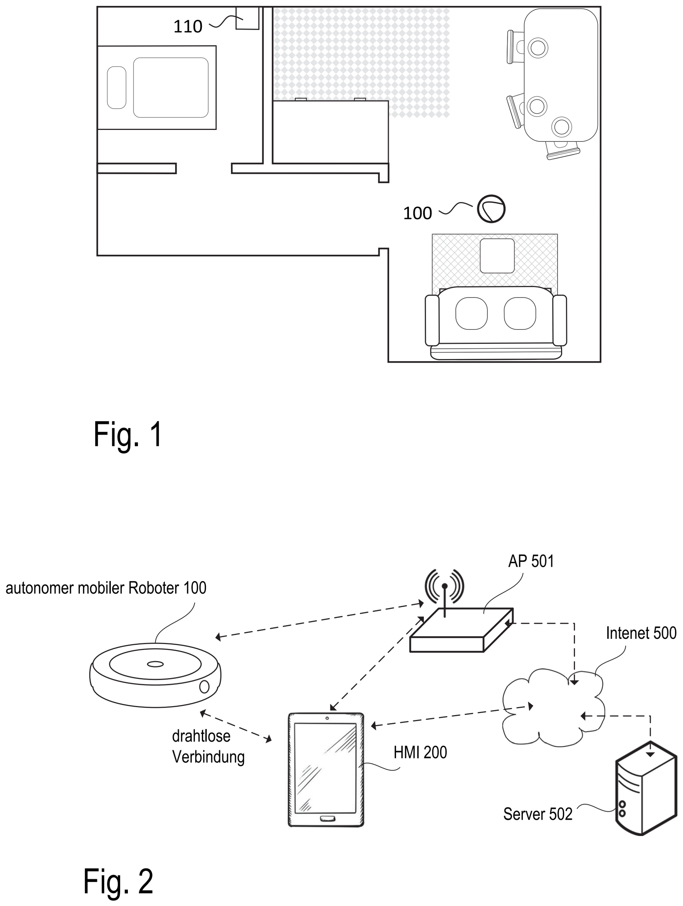

Figur 1 zeigt beispielhaft ein Einsatzgebiet für einen autonomen mobilen Roboter 100 sowie dessen aktuelle Position innerhalb des Einsatzgebietes. Das Einsatzgebiet ist beispielsweise eine Wohnung mit mehreren Räumen. Um ein autonomes Arbeiten ohne eine größere Zahl von Interaktionen mit dem Nutzer zu ermöglichen, kann an einer Stelle innerhalb des Einsatzgebietes eine Basisstation 110 vorhanden sein. Zu der Basisstation kann der autonomer mobile Roboter 100 nach Erledigung einer Aufgabe zurückkehren. An der Basisstation kann beispielsweise ein Akku des autonomen mobilen Roboters 100 aufgeladen werden. Bei Reinigungsrobotern, wie beispielsweise Saugroboter, kann an der Basisstation 110 beispielsweise der während einer Reinigungsfahrt aufgenommene Schmutz entsorgt werden. Bei Wischrobotern kann an der Basisstation 110 beispielsweise Reinigungsmittel zum Aufbringen auf die Bodenfläche aufgefüllt werden. Dies sind jedoch nur Beispiele. An der Basisstation 110 können grundsätzlich alle Tätigkeiten durchgeführt werden, welche nach oder während eines Einsatzes des autonomen mobilen Roboters 100 erforderlich sind.

Figur 2 zeigt exemplarisch die Einbindung eines autonomen, mobilen Roboters 100 in ein Heimnetzwerk, das z.B. ein Drahtlosnetzwerk (WLAN, ZigBee) sein kann. Im vorliegenden Beispiel ermöglicht ein WLAN-Access-Point (AP) 501 dem Roboter 100 die Kommunikation mit einer Mensch-Maschine-Schnittstelle (*human machine interface,* HMI) 200, sowie mit externen Rechner oder Server 502 (z.B. ein Cloud-Server), der über das Internet 500 erreichbar ist. Zusätzlich oder alternativ kann das HMI 200 auch eine direkte (drahtlose) Kommunikationsverbindung mit dem Roboter 100 aufbauen. Eine solche direkte (drahtlose) Kommunikationsverbindung kann beispielsweise eine Bluetooth oder eine NFC-Verbindung (*Near Field Communication*) sein. Jegliche andere geeignete Verbindung ist jedoch ebenso möglich.

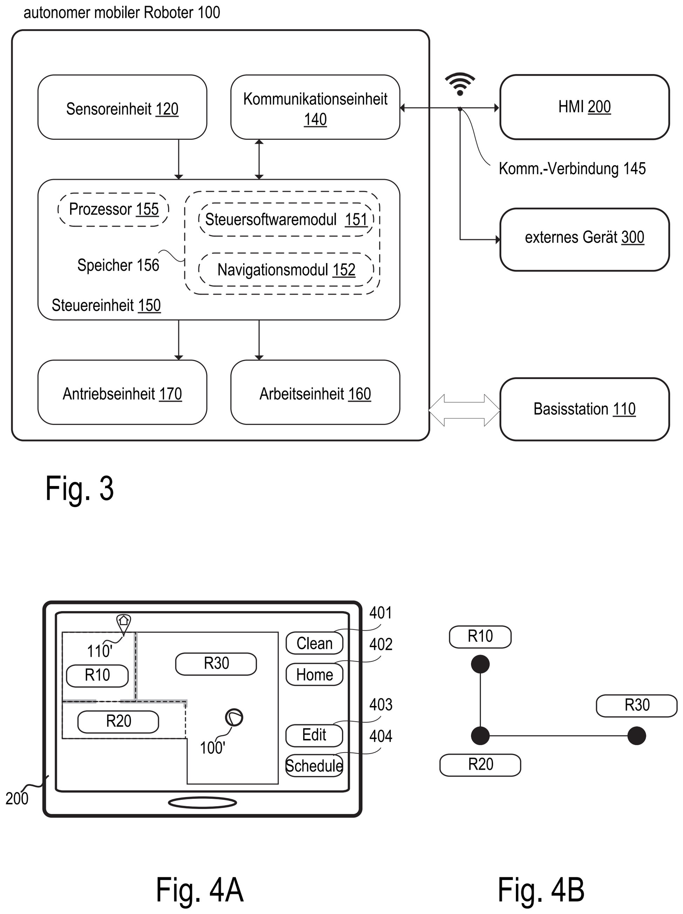

Figur 3 zeigt beispielhaft anhand eines Blockdiagramms die verschiedenen Einheiten (Module) des autonomen mobilen Roboters 100 aus Fig. 2. Dabei kann eine Einheit eine eigenständige Baugruppe oder ein Teil einer Software zur Steuerung des Roboters sein. Die für das Verhalten des Roboters 100 zuständige Software (umfassend ein Steuersoftwaremodul 151 und Navigationsmodul 152, siehe Fig. 3) kann auf der Steuereinheit 150 des Roboters 100 (mittels entsprechendem Prozessor 155 und Speicher156) ausgeführt werden. Die Steuereinheit 150 kann manche Operationen zumindest teilweise auch mit Hilfe eines externen Rechners durchführen. Das heißt, die von der Steuereinheit 150 benötigte Rechenleistung kann zumindest teilweise auf einen externen Rechner ausgelagert sein, welcher beispielsweise über ein Heimnetzwerk oder über das Internet (Cloud) erreichbar ist.

Der Roboter arbeitet im Wesentlichen autonom. Um ein Arbeiten ohne eine größere Zahl von Interaktionen mit dem Nutzer zu ermöglichen, besitzt der Roboter beispielsweise eine Basisstation 110, zu welcher er automatisch nach Erledigung einer Aufgabe zurückkehrt. An dieser kann er beispielsweise seine Batterien aufladen und/oder (bei einem Reinigungsroboter) aufgenommenen Schmutz entsorgen.

Der autonome mobile Roboter 100 umfasst eine Antriebseinheit 170, welche beispielsweise Elektromotoren, Getriebe und Räder aufweisen kann, mit deren Hilfe der Roboter 100 - zumindest theoretisch - jeden Punkt seines Einsatzgebiets anfahren kann. Die Antriebseinheit 170 kann z.B. dazu ausgebildet sein, von der Steuereinheit 150 empfangene Kommandos oder Signale in eine Bewegung des Roboters 100 umzusetzen.

Der autonome mobile Roboter 100 umfasst eine Kommunikationseinheit 140, um eine Kommunikationsverbindung 145 zu der Mensch-Maschine-Schnittstelle (HMI) 200 und/oder anderen externen Geräten 300 herzustellen. Die Kommunikationsverbindung kann beispielsweise eine direkte drahtlose Verbindung (z. B. Bluetooth), eine lokale drahtlose Netzwerkverbindung (z. B. WLAN oder ZigBee) oder eine Internetverbindung (z. B. zu einem Cloud-Service) sein. Die Mensch-Maschine-Schnittstelle 200 kann einem Nutzer Informationen über den autonomen mobilen Roboter 100 anzeigen (z.B. Batteriestatus, aktueller Arbeitsauftrag, Kartendaten (d.h. in einer Karte gespeicherte - und damit positionsbezogene - Information) wie eine Reinigungskarte, etc.) und Nutzerkommandos für einen Arbeitsauftrag des autonomen mobilen Roboters 100 entgegennehmen.

Beispiele für eine Mensch-Maschine-Schnittstelle 200 sind Tablet-PC, Smartphone, Smartwatch, Computer oder Smart-TV. Eine Mensch-Maschine-Schnittstelle 200 kann auch direkt in den Roboter integriert sein, wodurch der Roboter beispielsweise über Tasten, Gesten und/oder Sprachein- und -ausgabe bedient werden kann. Beispiele für externe Geräte 300 sind Computer und Server, auf denen Berechnungen und/oder Daten ausgelagert werden, externe Sensoren, die zusätzliche Informationen liefern, oder andere Haushaltsgeräte (z. B. andere autonome mobile Roboter 100B), mit denen der autonome mobile Roboter 100 zusammenarbeitet und/oder Informationen austauscht.

Der autonome mobile Roboter 100 kann eine Arbeitseinheit 160 aufweisen, wie beispielsweise eine Reinigungseinheit zur Reinigung einer Bodenfläche (z. B. Bürste, Saugvorrichtung) oder ein Greifarm zum Fassen und Transportieren von Gegenständen. In einigen Fällen wie beispielsweise bei einem Telepräsenz-Roboter oder einem Überwachungsroboter wird eine andere Baueinheit zur Erfüllung der vorgesehenen Aufgaben genutzt und es ist keine Arbeitseinheit 160 notwendig. So besitzt ein Telepräsenz-Roboter eine mit einer Mensch-Maschine-Schnittstelle 200 gekoppelte Kommunikationseinheit 140 mit einer Multimediaeinheit bestehend aus beispielsweise Mikrofon, Kamera und Bildschirm, um die Kommunikation zwischen mehreren räumlich weit entfernten Personen zu ermöglichen. Ein Überwachungsroboter ermittelt auf Kontrollfahrten mit Hilfe seiner Sensoren ungewöhnliche Ereignisse (z. B. Feuer, Licht, unautorisierte Personen, etc.) und informiert beispielsweise den Nutzer oder eine Kontrollstelle hierüber.

Der autonome mobile Roboter 100 kann eine Sensoreinheit 120 mit verschiedenen Sensoren aufweisen, beispielsweise einen oder mehrere Sensoren zur Erfassung von Informationen über die Umgebung (*environment*) des Roboters, wie z.B. die Position von Hindernissen im Robotereinsatzgebiet oder anderen Navigationsfeatures (z.B. Landmarken, *land marks*). Sensoren zur Erfassung von Informationen über die Umgebung sind beispielsweise aktive Sensoren zur Messung von Abständen zu Objekten (z.B. Wänden, Hindernissen, etc.) in der Umgebung des Roboters wie beispielsweise einen optischen und/oder akustischen Sensor, der mittels Triangulation oder Laufzeitmessung eines ausgesandten Signals Abstände messen kann (Triangulationssensor, 3D-Kamera, Laserscanner, Ultraschallsensoren). Andere typische Beispiele für geeignete Sensoren sind passive Sensoren wie Kameras, taktile bzw. berührungsempfindliche Sensoren zur Hinderniserkennung, Bodenabstandssensoren (z.B. zur Erkennung einer eine Absturzkante, einer Stufe einer Treppe, etc.) Sensoren zur Bestimmung der Geschwindigkeit und/oder des zurückgelegten Weges des Roboters wie z.B. Odometer, Inertialsensoren (Beschleunigungssensor, Drehratensensor) zur Bestimmung von Lage- und Bewegungsänderung des Roboters oder Radkontaktschalter, um einen Kontakt zwischen Rad und Boden zu detektieren.

Die erwähnte Steuereinheit 150 kann dazu ausgebildet sein, alle Funktionen bereitzustellen, die benötigt werden, damit der autonome mobile Roboter 100 sich selbstständig in seinem Einsatzgebiet bewegen und eine Aufgabe erfüllen kann. Hierzu umfasst die Steuereinheit 150 beispielsweise einen Prozessor 155 und ein Speicher 156, um eine Steuersoftware (siehe Fig. 3, Steuersoftwaremodul 151) des Roboters 100 abzuarbeiten. Die Steuereinheit 150 erzeugt basierend auf den Informationen, welche die Sensoreinheit 120 und die Kommunikationseinheit 140 liefern, die Steuerkommandos oder Steuersignale für die Arbeitseinheit 160 und die Antriebseinheit 170. Die Antriebseinheiten können diese Steuersignale bzw. Steuerkommandos in eine Bewegung des Roboters umsetzen. Das Steuersoftwaremodul 151 kann Software-Funktionen zur Objekterkennung und Arbeitsplanung umfassen.

Damit der Roboter autonom eine Aufgabe verrichten kann, ist als weiteres Softwaremodul ein Navigationsmodul 152 vorgesehen. Das Navigationsmodul 152 kann Software-Funktionen für die Navigation (z.B. Management der Karte, kartenbasierte Pfadplanung, Selbstlokalisierung des Roboters in der Karte, SLAM-Algorithmen etc.) des Roboters umfassen. Selbstverständlich können Steuersoftwaremodul 151 und Navigationsmodul 152 interagieren, Informationen austauschen und zusammenarbeiten. Dies ermöglicht dem Roboter, sich in seiner Umgebung beispielsweise anhand von Navigationsfeatures wie beispielsweise Landmarken zu orientieren und zu navigieren. Das Navigationsmodul 152 arbeitet beispielsweise mit einer Hindernisvermeidungsstrategie (Hindernisvermeidungsalgorithmus), einem SLAM-Algorithmus (*Simultaneous Localization and Mapping,* simultane Lokalisierung und Kartenerstellung) und/oder mit einer oder mehreren Karten des Robotereinsatzgebiets. Hierbei werden insbesondere Hindernisse mit Hilfe von Sensormessungen erfasst und ihre Position bestimmt. Die Position der Hindernisse kann in Form von Kartendaten gespeichert werden. Diese Verfahren sind an sich bekannt und werden daher hier nicht näher erläutert.

Die Karten des Robotereinsatzgebiets kann der Roboter während eines Einsatzes (*deployment*) neu erstellen oder eine zu Beginn des Einsatzes schon vorhandene Karte nutzen. Eine vorhandene Karte kann bei einem vorhergehenden Einsatz, beispielsweise einer Erkundungsfahrt, vom Roboter selber erstellt worden sein, oder von einem anderen Roboter und/oder Menschen zur Verfügung gestellt werden und wird beispielsweise in einem nicht-flüchtigen Speicher 156 dauerhaft (permanent) gespeichert. Alternativ können die permanent zu speichernden Karten des Robotereinsatzgebiets auch außerhalb des Roboters gespeichert werden, beispielsweise auf einem Computer im Haushalt des Nutzers des Roboters (z. B. Tablet-PC, Home-Server) oder auf einem über das Internet erreichbaren Computer (z. B. Cloud-Server). In dem Beispiel in Fig. 3 ist die Karte in dem Navigationsmodul 152 enthalten.

Generell ist eine vom Roboter 100 verwendbare (elektronische) Karte eine Sammlung von Kartendaten zur Speicherung von ortsbezogenen Informationen über ein Einsatzgebiet des Roboters 100 und die für den Roboter 100 relevante Umgebung in diesem Einsatzgebiet. Eine Art von ortsbezogenen Informationen die in einer Karte gespeichert werden können sind Informationen über die Lage von Objekten im Robotereinsatzgebiet. Solche Objekte können Hindernisse sein wie z.B. Wände, Türen, Möbelstücke, andere bewegliche und unbewegliche Objekte, mit denen der Roboter (zumindest theoretisch) kollidieren könnte. Auch eine Roboterbasisstation 110 kann ein in der Karte verzeichnetes Objekt sein. Die Lage von Objekten (Hindernissen) wird meist mittels Koordinaten definiert. Eine weitere Art von Kartendaten sind ortsbezogene Informationen betreffend die Durchführung (*performance*) einer Aufgabe (*task*) des Roboters 100 wie beispielsweise, welche Flächenstücke bearbeitet also insbesondere gereinigt wurden, oder welche Positionen (innerhalb des Robotereinsatzgebietes) der Roboter während seiner Tätigkeit angefahren hat. Eine weitere Art von ortsbezogenen Informationen sind die Aufteilung des Robotereinsatzgebietes in mehrere Räume und/oder Teilbereiche. Diese Aufteilung kann automatisiert durch den Roboter 100 erfolgen oder auch mit Hilfe des Nutzers. Der Nutzer kann die Aufteilung manuell vornehmen oder eine automatisiert vorgenommene Aufteilung manuell überarbeiten. Auch die Benennung der Räume (z.B. "Raum 1", "Raum 2", "Flur", "Küche", Wohnzimmer", "Schlafzimmer", etc.) kann in den Kartendaten enthalten sein. Für ein Teilgebiet und/oder einen Raum kann beispielsweise festgelegt werden, ob das Gebiet befahren werden darf oder nicht. Beispielsweise kann ein Teilgebiet als virtueller Sperrbereich (*virtual exclusion region*) abgegrenzt werden, z.B. wenn dieser nicht sicher durch den Roboter 100 befahren werden kann. Alternativ oder zusätzlich kann der Nutzer benutzerdefinierte Teilgebiete anlegen, bearbeiten und löschen. Benutzerdefinierte Teilgebiete können beispielsweise Bereiche definieren, die der Roboter 100 nicht befahren darf (Sperrbereich), oder die der Nutzer regelmäßig oder gelegentlich gezielt reinigen lassen will. Für verschiedene Robotereinsatzgebiete, wie beispielsweise unterschiedliche Stockwerke eines Hauses, können unterschiedliche Karten gespeichert werden.

Das Navigationsmodul 152 kann dazu ausgebildet sein, dass in den Karten die festgelegten virtuellen Sperrbereiche markiert werden können, die der Roboter 100 bei der Navigation nicht selbsttätig befährt und/oder überfahrt. Dies geschieht beispielsweise dadurch, dass die als virtueller Sperrbereich markierten Bereiche von der Steuereinheit 150 so behandelt werden, als ob der Sperrbereich ein Hindernis im Einsatzgebiet des Roboters 100 darstellen würde. Um ein Befahren des Sperrbereichs durch den Roboter 100 zu verhindern, kann deshalb die Steuereinheit 150 des Roboters 100 eine Hindernisvermeidungsstrategie (*obstacle avoidance strategy*), auch als Hindernisvermeidungsalgorithmus (*obstacle avoidance algorithm*) bezeichnet, nutzen, die dazu ausgebildet ist, basierend auf der Position von erkannten Hindernissen, den Roboter 100 so zu steuern, dass eine Kollision mit diesen Hindernissen vermieden wird. Basierend auf den mit den Kartendaten gespeicherten virtuellen Sperrbereich kann die Position eines oder mehrerer Sperrbereiche bestimmt werden. Diese Positionen können nun von der Hindernisvermeidungsstrategie in gleicher Weise genutzt werden, wie wenn ein reales Hindernis an dieser Stelle stünde. Dadurch wird auf einfache Art und Weise dafür gesorgt, dass der Roboter 100 einen virtuellen Sperrbereich nicht selbsttätig befährt und/oder überfährt.

Figur 4A zeigt ein Beispiel einer vom Roboter 100 erstellten Karte des beispielhaften Einsatzgebietes aus Figur 1. Die Karte kann z.B. auf einer HMI 200, z.B. auf einem Tablet-PC, dargestellt werden. Neben der eigentlichen Karte des Einsatzgebietes sind Schaltflächen oder Kontrollelemente 401, 402, 403, 404 dargestellt. In Figur 4A sind exemplarisch vier Kontrollelemente 401, 402, 403, 404 dargestellt. Dies ist jedoch lediglich ein Beispiel. Es können auch mehr oder weniger Kontrollelemente 401, 402, 403, 404 dargestellt werden. In einer Ansicht können beispielsweise auch gar keine Kontrollelemente 401, 402, 403, 404 dargestellt werden. Die Kontrollelemente 401, 402, 403, 404 können vom Nutzer betätigt werden um Anweisungen zur Steuerung und Kontrolle des Roboters 100 zu geben. Hierfür können die Kontrollelemente 401, 402, 403, 404 beispielsweise entsprechend gekennzeichnet sein. Im vorliegenden Beispiel sind die Kontrollelemente 401, 402, 403, 404 beispielsweise mit "Clean", "Home". "Edit" und "Schedule" bezeichnet.

Durch Berühren oder Betätigen des "Clean"-Kontrollelements 401 kann beispielsweise eine Reinigung des gesamten Einsatzgebietes gestartet werden. Für autonome mobile Roboter, die nicht oder nicht nur zur Reinigung von Oberflächen gedacht sind, können beispielsweise andere oder zusätzliche Kontrollelemente zum Starten einer oder mehrerer Aufgaben vorgesehen sein. Durch Berühren oder Betätigen des "Home"-Kontrollelements 402 kann der Roboter 100 beispielsweise zu seiner Basisstation 110 zurück gesandt werden. Dabei kann eine aktuell durchgeführte Tätigkeit beispielsweise pausiert, unterbrochen oder abgebrochen werden, sobald der Roboter 100 zu seiner Basisstation 110 zurück gesandt wird. Durch Berühren oder Betätigen des "Edit"-Kontrollelements 403 kann der Nutzer beispielsweise eine zuvor (vom Nutzer oder vom Roboter) vorgenommene Aufteilung des Einsatzgebietes manuell korrigieren und/oder an seine Bedürfnisse anpassen. Dies geschieht beispielsweise durch die Korrektur der Grenzen der zuvor bestimmten Teilgebiete oder durch Hinzufügen oder Entfernen von Teilgebieten. Ein solches Vorgehen ist grundsätzlich bekannt und wird daher an dieser Stelle nicht weiter erläutert. Durch Berühren oder Betätigen des "Schedule"-Kontrollelements 404 kann zu einer anderen Ansicht, z.B. einer Kalenderansicht (*time-table view*), gewechselt werden. Das heißt, auf der HMI 200 kann anstatt der in Figur 4A gezeigten Kartenansicht eine Kalenderansicht dargestellt werden. Eine Kalenderansicht kann beispielsweise aktuelle, geplante und/oder vergangene Tätigkeiten des Roboters 100 anzeigen und die Planung und/oder Kontrolle zukünftiger Einsätze ermöglichen. So kann beispielsweise ein Wochenüberblick mit den Tagen Montag (*Mon.*) bis Sonntag (*Sun.*) dargestellt werden. Zusätzlich oder alternativ können auch die letzten, der aktuelle und die kommenden Tage angezeigt werden. Beispielsweise können die letzten drei und die kommenden drei Tage angezeigt werden, so dass zusammen mit dem aktuellen Tag sieben Tage (also eine Woche) angezeigt werden. Zusätzlich oder alternativ kann der Nutzer durch die Tagesansicht blättern (scrollen). Der aktuelle Tag kann beispielsweise farbig oder durch eine beliebige andere Markierung (z.B. Aufschrift *today*) hervorgehoben werden.

Anstatt durch das Betätigen eines Kontrollelements 401, 402, 403, 404 kann dem Roboter 100 beispielsweise auch durch Berühren oder Auswählen eines der Teilgebiete eine oder mehrere Aufgaben in diesem Teilgebiet zugewiesen werden. Zusätzlich oder alternativ kann durch Berühren eines der Teilgebiete ein weiteres Fenster auf dem HMI 200 geöffnet werden, welches zusätzliche Informationen und/oder Einstellmöglichkeiten bietet. Die Teilgebiete können in der Karte beispielsweise entsprechend gekennzeichnet sein. Beispielsweise können die Teilgebiete mit Namen oder Nummern versehen werden. In dem Beispiel in Figur 4A sind die Teilgebiete beispielsweise mit R10, R20 und R30 bezeichnet. Das Teilgebiet R10 kann beispielsweise das Schlafzimmer (*bedroom*), das Teilgebiet R20 den Flur (*hallway*) und das Teilgebiet R30 das Wohnzimmer (*living room*) darstellen.

In der Karte können auch die aktuelle Position des Roboters 100' sowie die Position der Basisstation 110' dargestellt werden. Zusätzlich können auch, abhängig von der Art des Roboters 100) weitere Informationen wie die Position von Hindernissen, die bereits gereinigte Fläche, eine gemessene Verschmutzung oder eine geplante Route für eine Kontrollfahrt angezeigt werden.

Das in Figur 4A dargestellte HMI 200 welches eine Nutzerinteraktion über eine angezeigte Karte mit Toucheingabe ermöglicht ist jedoch lediglich ein Beispiel. So ist beispielsweise eine vergleichbare Interaktion ebenfalls über einen PC mit Maus-Eingabe möglich. Eine weitere Möglichkeit der Interaktion zwischen Nutzer und Roboter 100 ist beispielsweise die Sprachein- und -ausgabe, beispielsweise mit Sprachkommandos (z.B. "Starte Reinigung", Reinige living room", etc.).

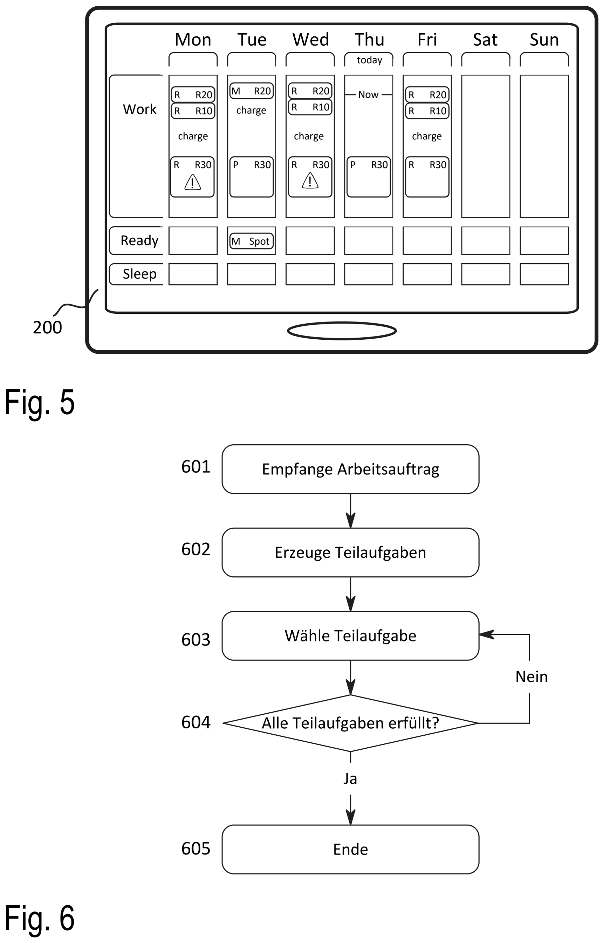

Figur 5 zeigt ein Beispiel für eine mögliche Kalenderansicht in Form einer Wochenübersicht, wobei der aktuelle Tag gekennzeichnet ist (z.B. "*today*")*.* In der Wochenübersicht werden beispielsweise vergangene Einsätze, laufende Einsätze und zukünftig geplante Einsätze in einer einzigen Ansicht dargestellt. Es ist jedoch ebenso möglich vergangene Einsätze, laufende Einsätze und zukünftig geplante Einsätze jeweils in einer eigenen Ansicht darzustellen. Viele weitere Darstellungen sind möglich. Beispielsweise kann der aktuelle Tag und eine vorgebbare Anzahl an Tagen in der Vergangenheit und/oder in der Zukunft angezeigt werden. Der Nutzer kann beispielsweise durch die Darstellungen blättern (scrollen) können. Beispielsweise kann der Nutzer durch eine Wisch-Geste auf einem Touch-Display zu einem anderen Tag oder einer anderen Ansicht wechseln.

In der Wochenübersicht in Figur 5 sind an verschiedenen Tagen zu verschiedenen Uhrzeiten verschiedene Einsätze bzw. Aufgaben dargestellt. Es können grundsätzlich verschiedene Arten von Einsätzen unterschieden werden. In Figur 5 sind diese beispielhaft mit "R", "M" und "P" gekennzeichnet. Mit "R" gekennzeichnete Einsätze sind beispielsweise regelmäßig geplante Einsätze, die sich in regelmäßigen Abständen (z.B. täglich, wöchentlich, oder nach beliebigen anderen Muster) wiederholen. Mit "P" gekennzeichnete Einsätze sind beispielsweise geplante einmalige Einsätze. Solche einmaligen Einsätze können beispielsweise vorsehen, dass der Roboter an einem bestimmten Tag zu einer bestimmten Uhrzeit ein bestimmtes Zimmer oder Teilgebiet reinigt. Mit "M" gekennzeichnete Einsätze können beispielsweise manuell vom Nutzer gestartete Einsätze zur sofortigen Ausführung sein. Derartige manuell gestartete Einsätze werden daher definitionsgemäß nicht für die Zukunft angezeigt. Es können grundsätzlich nur vergangene oder aktuell laufende manuell gestartete Einsätze dargestellt werden. Die Unterscheidung der verschiedenen Einsatzarten mittels Buchstaben ist lediglich ein Beispiel. Die Kennzeichnung mittels Farben oder jeglicher anderer Art von Symbolen ist ebenfalls möglich.

Dem Nutzer können in der Kalenderansicht grundsätzlich alternativ oder zusätzlich verschiedene andere Informationen gezeigt werden. Beispielsweise kann die Dauer eines dargestellten Einsatzes angezeigt werden. Wie in Figur 5 beispielhaft dargestellt, kann die Dauer eines Einsatzes beispielsweise durch die dargestellte Größe des Eintrags dargestellt werden. Es kann auch beispielsweise zusätzlich oder alternativ die Startzeit, die voraussichtliche Endzeit (bei laufenden oder zukünftig geplanten Einsätzen) und/oder die tatsächliche Endzeit (bei vergangenen Einsätzen) angezeigt werden (z.B. in einer Stundenansicht). Bei laufenden Einsätzen kann beispielsweise angezeigt werden, welcher Anteil der Aufgabe bereits verrichtet wurde und wieviel Zeit für die verbleibende Aufgabe schätzungsweise benötigt wird. Beispielsweise kann bei einem Reinigungsroboter angezeigt werden, welcher Anteil an der gesamten zu reinigenden Fläche bereits gereinigt wurde, wieviel der Fläche noch zu reinigen ist und wie viel Zeit hierfür voraussichtlich noch benötigt wird. Es können beispielsweise auch andere Parameter im Zusammenhang mit der Verrichtung der Aufgabe angezeigt werden, wie beispielsweise der Energieverbrauch oder die bereits aufgesammelte Menge an Schmutz.

Zusätzlich können ausgeführte und/oder geplante Zeiten zum Laden des Akkus des Roboters 100 oder zum Auffüllen sonstiger Ressourcen gekennzeichnet werden. Somit sind Pausen zwischen zwei Einsätzen, in denen der Roboter 100 keine Aufgaben erledigt hat oder erledigen kann, für den Nutzer leichter ersichtlich und verständlich. Ebenso können ungewöhnliche Ereignisse angezeigt werden, beispielsweise durch ein "Achtung"-Zeichen. Dadurch kann dem Nutzer angezeigt werden, wenn ein Einsatz nicht wie geplant verrichtet werden konnte. Beispielsweise kann ein Nutzer selbst einen Auftrag unterbrechen oder der Einsatz kann aus verschiedenen anderen Gründen nicht oder nicht fertig ausgeführt werden. Beispielsweise kann auch angezeigt werden, wenn ein Einsatz schneller als erwartet oder langsamer als erwartet ausgeführt werden konnte.

Weiterhin kann die angezeigte Kalenderzeit in verschiedene Aktivitätsmodi (auch als Robotermodi bezeichnet) des Roboters unterteilt werden. Die Aktivitätsmodi (Robotermodi) des Roboters 100 können beispielsweise beschreiben, welche Aktivitäten bzw. welches Verhalten ein Nutzer zu den angegebenen Zeiten vom Roboter erwarten kann. Beispielsweise kann ein Roboter 100 einen Arbeitsmodus (*work mode*)*,* einen Bereitschaftsmodus (*ready mode*) und einen Schlafmodus (*sleep mode*) aufweisen. Befindet sich der Roboter im Arbeitsmodus, führt er beispielsweise geplante Einsätze durch, welche er automatisch startet und ausführt. Befindet sich der Roboter 100 im Bereitschaftsmodus, so liegen zwar keine aktuellen Einsätze vor, welche der Roboter 100 durchführt, jedoch befindet er sich in Bereitschaft und kann zu jedem beliebigen Zeitpunkt vom Nutzer gestartet werden. Im Schlafmodus hingegen führt der Roboter 100 beispielsweise weder anstehende Einsätze aus, noch kann er vom Nutzer gestartet werden, bzw. sind vom Nutzer auch keine Einsätze in diesem Zeitraum geplant. Die verschiedenen Aktivitätsmodi werden weiter unten noch näher erläutert.

Um die Übersichtlichkeit zu erhöhen, kann die in der Kalenderansicht dargestellte Zeitskala in den verschiedenen Aktivitätsmodi unterschiedlich skaliert sein. Beispielsweise ist in dem Beispiel in Figur 5 der Arbeitsmodus "Work" deutlich größer dargestellt als die beiden anderen Aktivitätsmodi "Ready" und "Sleep". Alternativ kann ein Aktivitätsmodus auch komplett ausgeblendet werden.

Der Nutzer kann beispielsweise zukünftig geplante Einsätze des Roboters 100 durch Berühren und/oder Verschieben eines dargestellten Einsatzes umplanen, also beispielsweise zu einem anderen Zeitpunkt ausführen lassen. Durch Berühren oder Auswählen einer Aufgabe können beispielsweise auch weitere Informationen zu der entsprechenden Aufgabe und der Teilaufgabe bzw. den Teilaufgaben in welche die Aufgabe aufgeteilt wird angezeigt werden. Solche Informationen weisen beispielsweise auf: die Größe eines Teilgebiets, der geschätzte Verbrauch an Ressourcen (z.B. benötigte Zeit und Energie), der Zeitpunkt des letzten Robotereinsatzes, z.B. der letzten Reinigung, eines Teilgebietes, der Zeitpunkt des nächsten geplanten Robotereinsatzes, z.B. der nächsten Reinigung, eines Teilgebietes, Statistiken zu den letzten Einsätzen (z.B. letzte zehn Einsätze), wie beispielsweise Verbrauch an Ressourcen bei den letzten Einsätzen (z.B. benötigte Zeit), die durchschnittliche benötigte Zeit zur Bearbeitung, Schmutzaufnahme, etc., aufgetretene Probleme bei den letzten Einsätzen.

Durch das Berühren oder Auswählen einer Aufgabe können weitere Einstellmöglichkeiten zu der betreffenden Aufgabe und dem oder den Teilgebieten in welchen die Aufgabe verrichtet wird ermöglicht werden. Solche Einstellungen weisen beispielsweise auf: das Umbenennen eines Teilgebietes, die Gründlichkeit der Aktivität in diesem Teilgebiet (z.B. Saugstärke, Anzahl der Abdeckung der Reinigung (wie oft reinigt der Roboter ein Teilgebiet während einer einzelnen Aufgabe), Häufigkeit von Patrouillen, etc.), Einrichten von Sperrbereichen, Zeitpunkt der nächsten Reinigung, Art der Wiederholungen (z.B. täglich, wöchentlich, etc.), Einstellung zur Anzeige und Erstellung von Statistiken.

Derzeit verfügbare Systeme erlauben nur eine eingeschränkte Planung des Einsatzes eines autonomen mobilen Roboters 100 durch einen Nutzer mittels einer Kalenderfunktion. Hierbei kann der Nutzer beispielsweise eine Startzeit für eine Aufgabe vorgeben, z.B. Reinige Wohnzimmer täglich um 9:00 Uhr. Jedoch ist es dabei nicht möglich genauere Vorgaben zum Ablauf der Verrichtung der Aufgabe zu machen, wie beispielsweise das Festlegen einer Reihenfolge der zu reinigenden Räume bzw. Teilgebiete, oder erkennen wie lange der Roboter 100 für eine Tätigkeit voraussichtlich benötigen wird.

In etwas komplexeren Systemen kann eine Aufgabe des Roboters 100 in Teilaufgaben zerlegt werden. Beispielsweise kann die Aufgabe "Reinige Wohnung" in die Teilaufgaben "Reinige Wohnzimmer", "Reinige Schlafzimmer" und "Reinige Flur" zerlegt werden. Der Nutzer kann dann manuell die Reihenfolge der abzuarbeitenden Teilaufgaben festlegen. Eine solche manuelle Anpassung ist jedoch sehr zeitaufwendig und komplex und kann meist nur von geübten Nutzern erfolgreich durchgeführt werden. Die vorliegende Erfindung ermöglicht es, die Arbeitsplanung bei der Abarbeitung der Aufgaben und Teilaufgaben intuitiver und vor allem einfacher zu gestalten.

Typische Arbeitsaufträge im Haushalt sind beispielsweise "Reinige die Wohnung" für einen Reinigungsroboter (*cleaning robot*) oder "Kontrolliere, ob alles in Ordnung ist" für einen Überwachungsroboter (*security robot*). Ein Mensch zerlegt derartige Aufgaben oft in Teilaufgaben. Beispielsweise kann die Reinigung der Wohnung raumweise (*room-by-room*) erfolgen, also insbesondere erst das Schlafzimmer (*bedroom*), dann der Flur (*hallway*) und zuletzt das Wohnzimmer (*living room*). Ähnlich kann eine Kontroll-Aufgabe in Teilaufgaben zerlegt werden. Derartige Teilaufgaben sind beispielsweise "Sind alle Fenster geschlossen?", "Sind alle Elektrogeräte ausgeschaltet?", "Kontrolliere das Schlafzimmer" usw. Damit das Verhalten des Roboters für einen Menschen leichter verständlich ist, orientiert es sich an diesem Vorgehen.

Dies bedeutet, dass der Roboter beispielsweise automatisch und/oder basierend auf Nutzereingaben Strukturen in der Umgebung, wie beispielsweise einzelne Räume, erkennt, in seine Karte einträgt und basierend hierauf eine vom Nutzer zugewiesene Aufgabe in Teilaufgaben zerlegt. Verfahren zur Aufteilung eines kartierten Gebiets in Teilgebiete und insbesondere Räume sind an sich bekannt und werden an dieser Stelle nicht weiter erläutert. Die Zerlegung eines Arbeitsauftrags in Teilaufgaben wird im Folgenden beispielhaft erläutert.

Figur 6 zeigt ein mögliches Verfahren zum Erstellen einer Planung zur Ausführung einer Aufgabe basierend auf der Zerlegung in Teilaufgaben. Der Nutzer kann einen Arbeitsauftrag zur vollständigen Reinigung der Wohnung zur sofortigen Ausführung oder zum Eintragen in einen Kalender zur Ausführung zu einem späteren Zeitpunkt erzeugen, indem er beispielsweise die in Figur 4A dargestellte "Clean"-Schaltfläche 401 berührt (Empfange Arbeitsauftrag, Schritt 601). Aufgrund der vollständigen Aufteilung des Robotereinsatzgebiets in Teilgebiete wird die Aufgabe der vollständigen Reinigung dadurch erfüllt, dass alle Teilgebiete (insbesondere *bedroom, hallway, living room*) gereinigt werden. Der Arbeitsauftrag "Reinige die Wohnung" wird somit beispielsweise in die Teilaufgaben "Reinige Bedroom", "Reinige Hallway" und "Reinige Living Room" zerlegt (Erzeuge Teilaufgaben, Schritt 602). Dabei ist die Aufteilung in Teilgebiete lediglich ein Beispiel. Gemäß einem weiteren Beispiel kann der Roboter 100 beispielsweise die Bodenfläche saugen und feucht wischen. Oder es stehen zwei Roboter 100 zur Verfügung, von denen ein erster Roboter die Bodenfläche saugen und ein zweiter Roboter die Bodenfläche feucht wischen kann. Der Arbeitsauftrag "Reinige die Wohnung" kann dann beispielsweise in die Teilaufgaben "Sauge die Wohnung" und "Wische die Wohnung feucht" zerlegt werden. Es ist ebenso möglich zusätzlich noch eine Zerlegung in Teilgebiete vorzunehmen. Die Teilaufgaben könnten dann beispielsweise lauten "Sauge Bedroom", "Sauge Hallway", "Sauge Living Room", "Wische Bedroom", "Wische Hallway" und "Wische Living Room"

In einem nächsten Schritt wird eine Reihenfolge für die Abarbeitung der Teilgebiete festgelegt. Hierfür kann beispielsweise die strukturelle Anordnung von Teilgebieten in einem Graphen bzw. einer topologischen Karte genutzt werden. Hierbei kann beispielsweise jedem Teilgebiet ein Knoten zugeordnet werden, wobei die Knoten mit Kanten verbunden sind. Die Kanten beschreiben, wie die Teilgebiete befahrbar verbunden sind (also insbesondere welche Räume mit Türen verbunden sind). Figur 4B zeigt beispielhaft eine topologische Karte, die basierend auf der Aufteilung aus Fig. 4A erstellt wurde. Es sei angemerkt, dass Wohnungen mit mehr Zimmern und entsprechend mehr Teilgebieten zu komplex verzweigten topologischen Karten führen können. Zusätzlich können in die topologische Karte weitere Informationen wie beispielsweise die Raumgröße, Bodenbelag oder zu erwartende Einsatzdauern aufgenommen werden, die ein Teilgebiet oder die Verbindung zweier Teilgebiete charakterisieren.

Wie oben beschrieben können jedem Knoten eine oder mehrere Teilaufgaben zugeordnet werden. So können an sich bekannte Algorithmen zu Graphen und topologischen Karten genutzt werden, um eine Reihenfolge der Abarbeitung der Teilaufgaben zu bestimmen. Beispielsweise können Monte-Carlo-Algorithmen oder der Dijkstra-Algorithmus zur Bestimmung der Reihenfolge der Abarbeitung genutzt werden. Bei der Auswahl der Reihenfolge kann eine nach einem frei wählbaren Maß optimale Lösung (z. B. kürzester Weg oder schnellste Abarbeitung des gesamten Arbeitseinsatzes) gesucht werden.

In einem einfachen Beispiel können die Teilaufgaben des Teilgebiets als erste Teilaufgaben eingeplant werden, in welchem sich der autonome mobile Roboter 100 befindet (Wähle Teilaufgabe, Schritt 603). Dies ist beispielsweise das Teilgebiet, in welchem sich die Basisstation 110 befindet, an der der Roboter seinen Akku lädt. Somit kann die Teilaufgabe sofort begonnen werden. Liegt für ein Teilgebiet nur eine einzelne Teilaufgabe vor, muss für dieses Teilgebiet keine weitere Reihenfolge bestimmt werden. Liegen für ein Teilgebiet mehrere Teilaufgaben vor, können diese in eine logische Reihenfolge gebracht werden (z.B. saugen vor wischen). Die Reihenfolge kann auch nach vorgegebenen Kriterien gemäß Priorität gewählt werden (z.B. erst prüfen ob Feuer oder Rauch im Raum, dann prüfen ob Fenster geschlossen). Auch eine zufällige Reihenfolge ist möglich, wenn einzelne Teilaufgaben in einem Teilgebiet dieselbe Priorität aufweisen. Sind die Teilaufgaben eines Teilgebietes abgearbeitet, kann als nächste Teilaufgabe eine beliebige andere noch nicht eingeplante Teilaufgabe gewählt werden. Beispielsweise wird die Teilaufgabe gewählt, deren hiermit verknüpftes Teilgebiet am schnellsten durch den Roboter 100 erreicht werden kann. Beispielsweise ist dies eine Teilaufgabe in einem benachbarten Teilgebiet. Auch in dem benachbarten Teilgebiet können wiederum mehrere Teilaufgaben abzuarbeiten sein. Dies wird so lange wiederholt, bis alle Teilaufgaben eingeplant wurden (Alle Teilaufgabe erfüllt?, Schritt 604).

Es sei angemerkt, dass bei der hier beispielhaft erläuterten Arbeitsplanung der autonome mobile Roboter 100 in dem Teilgebiet beginnt, in dem seine Basisstation 110 steht. Das Ende der Abarbeitung der Teilaufgaben insbesondere einer Reinigung kann somit in einem sehr weit entfernten Teilgebiet sein. Es kann jedoch unerwünscht sein, dass der Roboter nach der Reinigung mit einem vollen Schmutzbehälter und/oder verschmutzten Aktoren wie Bürsten über die schon gereinigte Fläche fährt, wodurch diese wieder verschmutzt werden kann. Um dies zu vermeiden, kann die Reihenfolge der Abarbeitung umgekehrt werden, wodurch das Teilgebiet, in dem die Basisstation steht, nun als letztes abgearbeitet wird. So wird die zu befahrende zuvor gereinigte Fläche minimiert.

Wenn alle Teilaufgaben eingeplant sind (Ende, Schritt 605), kann eine Rückkehr des Roboters 100 beispielsweise zum Startpunkt und/oder zur Basisstation eingeplant werden. Wenn der Nutzer dem Roboter 100 einen direkten Arbeitsauftrag ("Reinige die Wohnung") gegeben hat, kann der Roboter 100 sofort automatisch mit der Aufgabe beginnen. Zusätzlich oder alternativ kann der Nutzer sich den erstellten Plan anzeigen lassen. Er kann diesen beispielsweise manipulieren und an seine Bedürfnisse anpassen, bevor der Roboter 100 mit der Abarbeitung beginnt. Insbesondere kann der Nutzer die Reihenfolge der Teilaufträge ändern. Beispielsweise kann der Nutzer wünschen, dass der Roboter mit einem vorgebbaren Raum beginnt (z.B. da er sich in diesem gerade aufhält). Die Reihenfolge der Abarbeitung der Teilaufgaben wird in einem solchen Fall gemäß der Vorgabe des Nutzers aktualisiert.

Zusätzlich oder alternativ kann der so erstellte Arbeitsplan in einen Kalender eingetragen werden. Der Arbeitsplan würde dann zu dem im Kalender festgelegten Zeitpunkt ausgeführt. Der festgelegte Zeitpunkt kann vom Nutzer frei gewählt werden und in geeigneten Abständen wiederholt werden. Der Nutzer kann beispielsweise schon mit dem Arbeitsauftrag den Zeitpunkt des in den Kalender einzutragenden Beginns der Abarbeitung der Teilaufgaben mitteilen. Zusätzlich oder alternativ kann der Nutzer zu jeder anderen Zeit den Zeitpunkt des in den Kalender einzutragenden Beginns der Abarbeitung der Teilaufgaben festlegen, verschieben oder löschen. Der Arbeitsplan kann beispielsweise in einer Kalenderansicht wie sie in Fig. 5 gargestellt ist angezeigt werden.

Das beschriebene Verfahren zur Planung der Ausführung einer Aufgabe durch die Zerlegung in Teilaufgaben basierend auf der Struktur der Umgebung ist wie oben bereits erläutert dazu geeignet, um eine allgemeine Aufgabe in Teilaufgaben auch für eine Vielzahl an Robotern zu zerlegen. Dabei können mehrere Roboter sowohl in demselben Einsatzgebiet, bzw. gleichen Teilgebieten jeweils entsprechende Aufgaben durchführen. Dies können dieselben oder unterschiedliche Aufgaben für verschiedene Roboter sein. Es ist jedoch auch möglich, dass verschiedene Roboter dieselben oder unterschiedliche Aufgaben in unterschiedlichen Teilgebieten durchführen.

Beispielsweise kann die Struktur der Umgebung die Stockwerke eines Hauses beschreiben, wobei sich in jedem Stockwerk ein Roboter zur Verrichtung einer Aufgabe (z. B. Reinigung) befindet. Ein Arbeitsauftrag "Reinige das Haus" für ein Haus mit zwei Stockwerken, kann nun in die Teilaufgaben "Reinige Stock 1" für den Roboter im ersten Stockwerk und "Reinige Stock 2" für den Roboter im zweiten Stockwerk zerlegt werden. Für jeden der beiden Roboter kann die Teilaufgabe entsprechend dem zuvor beschriebenen Vorgehen weiter zerlegt werden.

In einem weiteren Beispiel sind ein Saugroboter und ein Wischroboter gemeinsam in einem Einsatzgebiet eingesetzt. Hierbei gibt es wie oben bereits beschrieben beispielsweise Vorgaben, die zu erfüllen sind. Zum Beispiel soll ein Teilgebiet erst gesaugt und anschließend gewischt werden. Dabei kann es sein, dass nicht alle Teilgebiete gewischt werden sollen (z. B. Gebiete mit Teppichboden). Und Teilgebiete die gewischt wurden, sollen möglicherweise nicht (erneut) vom Saugroboter befahren werden. Zusätzlich kann es notwendig sein, dass der Wischroboter regelmäßig eine Reinigungsflüssigkeit an einer dazu eingerichteten Basisstation nachfüllt.

Entsprechend diesem Beispiel könnte ein Arbeitsauftrag "Reinige die Wohnung" in einen ersten Auftrag "Sauge die Wohnung" für den Saugroboter und in einen zweiten Auftrag "Wische die Wohnung" des Wischroboters zerlegt werden. Der Auftrag "Sauge Wohnung" kann wiederum in Teilaufgaben für den Saugroboter entsprechend den Teilgebieten zerlegt werden. Der Auftrag "Wische Wohnung" kann in Teilaufgaben für den Wischroboter in Abhängigkeit von den Teilaufgaben des Saugroboters zerlegt werden. Hierbei wird immer dann eine Aufgabe für den Wischroboter eingeplant, wenn die Vorgaben zur Bearbeitung erfüllt sind (also insbesondere nachdem der Saugroboter das Teilgebiet gereinigt hat).

Die Reihenfolge der Teilaufgaben für den Saugroboter kann hierbei so gewählt werden, dass beide Roboter gemeinsam möglichst schnell mit der Reinigung fertig sind. Insbesondere kann die Reihenfolge der Teilaufgaben so gewählt werden, dass der Saugroboter die letzte Teilaufgabe in dem Teilgebiet verrichtet, in dem seine Basisstation steht wie zuvor beschrieben. Hierdurch kann der Wischroboter dieses Teilgebiet wischen, nachdem der Saugroboter seine Tätigkeit abgeschlossen hat. Zuvor kann der Wischroboter das vorher vom Saugroboter gereinigte Teilgebiet wischen.

Für die Planung eines Arbeitsauftrags für mehrere Roboter kann eine Kommunikationsverbindung zwischen den Robotern und/oder einer zentralen Planungsinstanz vorgesehen sein. Insbesondere können alle Roboter über die gleiche HMI 200 einen Arbeitsauftrag erhalten. Entsprechend kann die vollständige Aufteilung des Arbeitsauftrags von der HMI 200 erfolgen und die jeweiligen Teilaufträge werden an die Roboter gesandt.

Alternativ kann die HMI 200 den Arbeitsauftrag in einzelne Aufträge für die Roboter (z.B. "Reinige Stock") aufteilen. Dieser Arbeitsauftrag für den Roboter kann von diesem Roboter in weitere Teilaufgaben zerlegt werden.

In einem weiteren Beispiel wird der Arbeitsauftrag an einen der Roboter gesandt, welcher die Aufteilung in Teilaufgaben (oder in einzelne Aufträge für die Roboter) vornimmt. Beispielsweise kann ein Saugroboter die Arbeitsplanung für einen Wischroboter übernehmen, da der Saugroboter alle hierfür notwendigen Informationen zur Verfügung haben kann. Alternativ können die Roboter auch mit dezentralen Algorithmen untereinander die Aufteilung des Arbeitsauftrags in Teilaufgaben bestimmen.

Eine weitere Möglichkeit ist die Aufteilung des Arbeitsauftrags in Teilaufgaben auf einem Cloud-Server oder einem Home-Server, der mit dem HMI 200 und den Robotern 100 verbunden ist, und der die notwendigen Kartendaten zur Verfügung hat. Durch die hohe Rechenleistung eines solchen externen Computers können beispielsweise auch komplexe Berechnungen zur Optimierung eines Arbeitsplans durchgeführt werden.

Für jede Teilaufgabe kann der zu erwartende Verbrauch an Ressourcen ermittelt werden. Ressourcen sind hierbei beispielsweise die benötigte Zeit zur Erledigung der (Teil-) Aufgabe, die benötigte Energie zur Erledigung der (Teil-) Aufgabe, eine benötigte Reinigungsflüssigkeit zur Auftragung auf eine Bodenfläche oder die Kapazität eines Behälters zur Aufnahme von Schmutz (z. B. Staub).

Der Verbrauch an Ressourcen hängt beispielsweise von den durch den Nutzer gewählten Einstellungen der Parameter für die Erledigung einer (Teil-)Aufgabe (z. B. Saugstärke, Menge an verwendetem Putzmittel) als auch von der Umgebung in der die Teilaufgabe ausgeführt wird ab. Dementsprechend kann es notwendig sein, den Verbrauch neu zu ermitteln wenn der Nutzer Änderungen an den Einstellungen und/oder an der in der Karte verzeichneten Struktur der Umgebung (insbesondere Aufteilung in Teilgebiete) vornimmt, auf der die Teilaufgabe basiert. Zusätzlich kann sich die Schätzung des Verbrauchs an Änderungen in der Umgebung anpassen, die der Nutzer nicht über ein HMI 200 vornimmt. Dies sind insbesondere neue Einrichtungsgegenstände (z. B. neue Stühle, die einfacher oder schwerer zu umfahren sind) oder eine Änderung des Bodenbelags (z. B. neuer Teppich).

Die Schätzung des Verbrauchs an Ressourcen kann mit Hilfe von mathematischen Modellen oder Erfahrungen vorhergehender Einsätze geschehen. Das Ermitteln der Ressourcen geschieht hierbei beispielsweise basierend auf Erfahrungswerten von vorhergehenden Arbeitseinsätzen in dem Einsatzgebiet. Beispielsweise kann hierfür nach der Erledigung einer Teilaufgabe in einem Teilgebiet die benötigte Zeit, die verbrauchte Energie etc. gespeichert werden. Für den nächsten Einsatz können diese gespeicherten Werte als Schätzung genutzt werden.

Die Schätzung kann beispielsweise basierend auf den Erfahrungswerten mehrerer Arbeitseinsätze weiter verbessert werden. Beispielsweise kann hierfür nach jeder Erledigung einer Teilaufgabe in einem Teilgebiet die benötigte Zeit, die verbrauchte Energie etc. gespeichert werden. Beispielsweise kann als Schätzung der Mittelwert des Verbrauchs an Ressourcen der letzten zehn (oder mehr/weniger) Einsätze genutzt werden. Alternativ kann auf den Mittelwert ein Sicherheitsaufschlag addiert werden. Beispielsweise kann der Sicherheitsaufschlag ein Fixwert von beispielsweise 5%, 7%, 10% oder 15% sein oder basierend auf der Standardabweichung des Verbrauchs an Ressourcen der letzten Einsätze ermittelt werden.

Wenn der Roboter neu in ein Einsatzgebiet kommt, stehen grundsätzlich keine Erfahrungswerte des Roboters für den Ressourcenverbrauch zur Verfügung. Dann kann der Verbrauch beispielsweise basierend auf Erfahrungen anderer Roboter in anderen Gebieten mit ähnlichen Eigenschaften erfolgen. Beispielsweise kann bekannt sein, dass ein spezifischer Typ an Robotern mit einem bestimmten Arbeitsmodus durchschnittlich eine Minute je Quadratmeter zu reinigender Fläche für die Reinigung benötigt. Basierend auf der in der Karte verzeichneten Größe des Teilgebiets kann hieraus die zu erwartende Zeit zur Erledigung der (Teil-)Aufgabe ermittelt werden. Auch ist es möglich, wenn ein Roboter ausgetauscht wird und durch einen neuen Roboter ersetzt wird, dass die durch den zuvor verwendeten Roboter ermittelten Werte zunächst an den neuen Roboter weitergegeben werden. Der neue Roboter kann die Werte dann im Weiteren nach einer oder mehreren eigenen erledigten Arbeitsaufträgen in dem Gebiet anpassen und aktualisieren.

Es sei angemerkt, dass eine flächenbasierte Schätzung des Verbrauchs an Ressourcen zwar sehr einfach aber auch sehr grob ist. Bessere Schätzungen können beispielsweise durch die Berücksichtigung der Geometrie des Teilgebiets, die im Teilgebiet befindlichen Hindernisse und des Bodenbelags im Teilgebiet erzielt werden. Beispielsweise ist ein lang gezogenes Teilgebiet (z. B. *Hallway* R20 in Fig. 4) schneller zu reinigen als ein gleich großes quadratisches Gebiet, da der Roboter die gleiche Fläche mit wenigen parallelen Bahnen abdecken kann. Eine lange Bahn kann vergleichsweise schnell befahren werden. Ein Manöver zum Wenden, um auf die nächste zu reinigende Bahn zu gelangen, benötigt hingegen relativ viel Zeit. Ein konvexes Teilgebiet kann mit einem Zug paralleler Bahnen gereinigt werden, während ein konkaves Teilgebiet in der Regel mehrere Fahrten über schon gereinigte Gebiete erfordern kann, wodurch mehr Zeit und andere Ressourcen benötigt werden. Ein Teppichboden besitzt einen erhöhten Reibungswiederstand im Vergleich zu einem Hartboden, was zu einem erhöhten Energieverbrauch führen kann. Herumstehende Hindernisse wie beispielsweise Stühle müssen umfahren werden, wodurch mehr Zeit und andere Ressourcen erforderlich sein können.

Der Roboter kann während oder nach dem Abarbeiten einer Teilaufgabe den tatsächlichen Verbrauch an Ressourcen mit einem geschätzten Wert vergleichen. Wenn hierbei eine Abweichung festgestellt wird, kann eine Korrektur der Planung notwendig sein. So kann bei einer längeren Reinigungsdauer eines Teilgebiets der Beginn der nachfolgenden Einsätze nach hinten verschoben werden. Notwendige Ladezeiten können sich verlängern und es kann ein zusätzliches Nachladen des Akkus erforderlich sein. Schätzungen des Verbrauchs an Ressourcen für zukünftige (Teil-)Aufgaben können basierend auf dem abweichenden Wert angepasst werden.

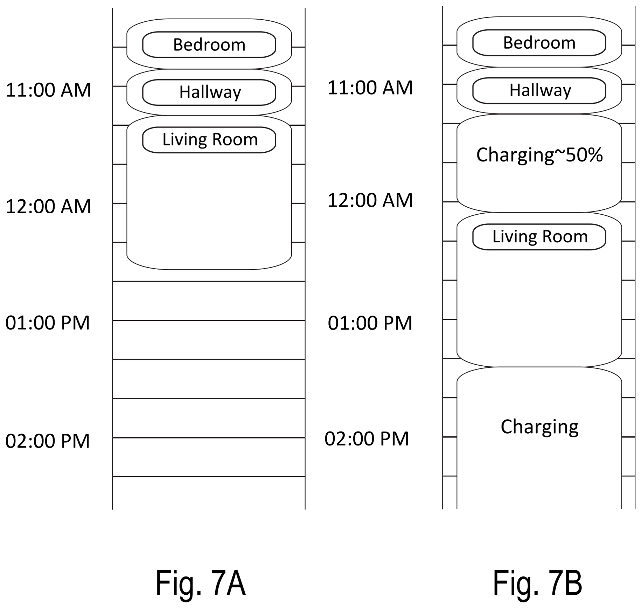

Figur 7A zeigt beispielhaft die Darstellung eines geplanten Arbeitsablaufs für die Reinigung des in Fig. 4A dargestellten Einsatzgebiets. Hierbei wird die Größe eines Blocks zur Darstellung einer Teilaufgabe entsprechend der zu erwartenden Dauer für die Erledigung einer Teilaufgabe gewählt. Insbesondere ist die Höhe eines dargestellten Blocks proportional zu der zu erwartenden Dauer für die Erledigung einer Teilaufgabe gewählt. Hierdurch kann ein Nutzer einfach erkennen, wie viel Zeit für jede (Teil-)Aufgabe benötigt wird, und wann mit der Verrichtung einer neuen (Teil-)Aufgabe (insbesondere der nächsten (Teil-)Aufgabe) begonnen wird. Andere Darstellungsweisen sind jedoch ebenfalls möglich.

Insbesondere kann dem Nutzer angezeigt werden, wann eine geplante Teilaufgabe begonnen wird. Hierfür kann die entsprechende Uhrzeit neben der zu erledigenden Teilaufgabe angezeigt werden. Dies ermöglicht es dem Nutzer, sich auf die Arbeit des Roboters einzurichten. Während der Roboter den Arbeitsplan abarbeitet, kann es vorkommen, dass eine Teilaufgabe schneller (langsamer) als erwartet abgearbeitet wird. In diesem Fall kann die Startzeit der nachfolgenden Teilaufgaben entsprechend nach vorne (hinten) korrigiert werden.

Alternativ (beispielsweise auf Wunsch des Nutzers) kann eine Teilaufgabe immer zu dem vorherbestimmten Starttermin verrichtet werden. Wenn nach Vollendung einer Teilaufgabe bis zum Starttermin der nachfolgenden Aufgabe noch Zeit ist, kann der Roboter dann mit dem Beginn der neuen Teilaufgabe bis zu dem Starttermin warten oder er kann zwischenzeitlich eine andere Tätigkeit verrichten. Hierdurch kann der Nutzer den Roboter zusätzlich nutzen, um sich zu einem bestimmten Zeitpunkt an etwas zu erinnern (z. B. Wecker-Funktion). Kommt der Roboter beispielsweise zu einer vorgegebenen Zeit in das Schlafzimmer (*bedroom*), wird der Nutzer durch die Aktivität des Roboters geweckt. Der Roboter kann die freie Zeit jedoch auch beispielsweise zum Aufladen des Akkus, zum Entsorgen von Schmutz oder zum Durchführen einer zusätzlichen Schnellreinigung besonders verschmutzter Bereiche wie beispielsweise einer Eckenreinigung nutzen. Alternativ kann der Roboter auch zu einem vordefinierten Ort (insbesondere die Basisstation) fahren, wo der Nutzer Wartungsarbeiten wie das Entleeren des Schmutzbehälters vornehmen kann. Alternativ kann der Roboter auch eine Kontrollaufgabe durchführen. Beispielsweise können im Rahmen einer Kontrollaufgabe anwesende Personen detektiert werden oder der Status von Haushaltsgeräten oder die Erreichbarkeit einzelner Bereiche des Einsatzgebietes (z.B. ob Zimmertüren geschlossen oder geöffnet sind) geprüft werden.

Wenn der zu erwartende Verbrauch an Ressourcen zur Ausführung einer (Teil-) Aufgabe bekannt ist, kann zusätzlich geprüft werden, ob vor Beginn einer Teilaufgabe noch genügend Ressourcen zur vollständigen Erledigung einer Aufgabe zur Verfügung stehen. Insbesondere kann bei der Planung von Teilaufgaben geprüft werden, wie viele Ressourcen nach der Verrichtung einer Teilaufgabe zur Verrichtung der nachfolgenden Teilaufgabe(n) noch zur Verfügung stehen. Beispielsweise kann es eine zeitliche Vorgabe geben, dass der Roboter zu einer bestimmten Zeit keine Aufgabe mehr verrichten soll (z. B. Schlafmodus). Wenn festgestellt wird, dass die Verrichtung einer Teilaufgabe in diese Zeit fallen würde, kann die Verrichtung der Teilaufgabe auf den nächsten möglichen Zeitpunkt verschoben werden.

Wenn nicht genügend Ressourcen, wie insbesondere die in einem Akku gespeicherte Energie, zur vollständigen Erledigung einer Teilaufgabe zur Verfügung stehen, kann ein Auffüllen der Ressourcen eingeplant werden. Figur 7B zeigt beispielhaft einen Arbeitsplan bei dem das Aufladen (*charging*) des Akkus eingeplant ist. Ein Auffüllen der Ressourcen kann auch die Leerung eines Schmutzbehälters (Vergrößern der Aufnahmekapazität) oder das Auffüllen einer Reinigungsflüssigkeit sein.

Beispielsweise kann für die Reinigung der Teilgebiete *Bedroom* R10 und *Hallway* R20 jeweils ca. 25% der Kapazität des Akkus und für die Reinigung des Teilgebiets *Living Room* R30 ca. 80% der Kapazität des Akkus benötigt werden. Nach der Reinigung des Teilgebiets *Bedroom* R10 sind somit noch 75% der Kapazität des Akkus vorhanden. Dies ist ausreichend, um das Teilgebiet *Hallway* R20 zu reinigen. Nach der Reinigung des Teilgebiets *Hallway* R20 sind gemäß diesem Beispiel dann noch 50% der Kapazität des Akkus vorhanden. Dies reicht jedoch nicht für eine vollständige Reinigung des Teilgebiets *Living Room* R30. Entsprechend kann zwischen zwei Teilaufgaben ein Aufladen des Akkus eingeplant werden.

Die für das Aufladen des Akkus benötigte Zeit kann basierend auf der Ladecharakteristik des Akkus, dem gewählten Ladeprogramm (insbesondere Ladestrom und Ladespannung) und der zu ladenden Energiemenge abgeschätzt werden. Nach Abschluss des Ladens kann die nächste ausstehende Teilaufgabe (z.B. die Reinigung des Teilgebiets *Living Room* R30) eingeplant werden.

Wenn der Nutzer nach Erstellung eines Arbeitsplans Änderungen vornimmt, die den Verbrauch an Ressourcen ändern (z. B. Saugstärke, Abdeckhäufigkeit), so kann es sein, dass der Arbeitsplan neu erstellt werden muss. Beispielsweise kann der Nutzer die Saugstärke erhöhen, wodurch der Energieverbrauch steigt und entsprechend mehr oder längere Ladepausen eingeplant werden müssen. Beispielsweise kann der Nutzer die Häufigkeit der Reinigung der Fläche je Reinigungsdurchgang erhöhen (so dass z. B. jeder Punkt mindestens zweimal statt nur einmal gereinigt wird), wodurch die Dauer der Reinigung und hiermit verbunden der Energiebedarf steigt. Entsprechend müssen längere und mehr Ladezeiten sowie auch längere Arbeitszeiten eingeplant werden.

Einige Ressourcen wie beispielsweise die Kapazität eines Schmutzbehälters oder einer Reinigungsflüssigkeit können durch den Nutzer aufgefüllt werden, wofür ein Nutzereingriff erforderlich ist. Hier kann geprüft werden, ob zu erwarten ist, dass eine geplante Teilaufgabe mit den derzeit noch zur Verfügung stehenden Ressourcen erfolgreich durchgeführt werden kann. Wenn dies nicht der Fall sein sollte, kann der Nutzer hierüber benachrichtigt werden, beispielsweise indem eine Nachricht über das HMI 200 gesendet wird.

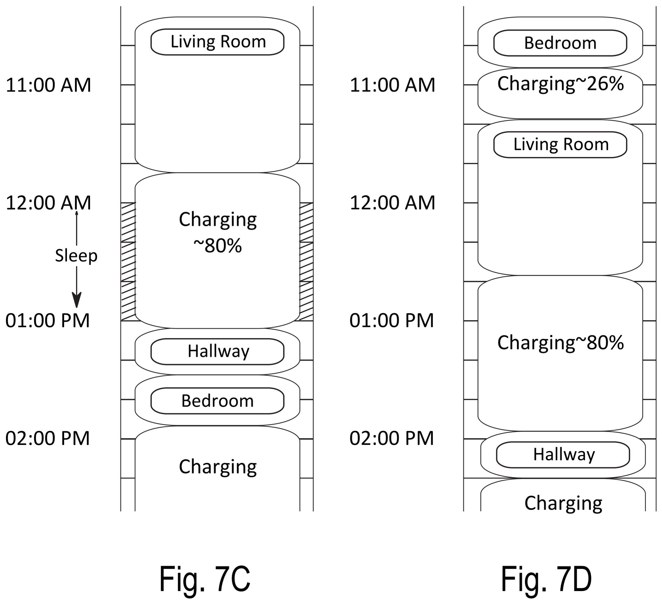

Figur 7C zeigt ein weiteres Beispiel für eine automatisch erstellte Arbeitsplanung. Hierbei hat der Nutzer jedoch eine Vorgabe zur Arbeitsweise des Roboters gemacht. Diese Vorgabe besagt beispielsweise, dass der Roboter in einem vorgegebene Zeitintervall (12:00 Uhr bis 13:00 Uhr) in einem Schlafmodus (*sleep mode*) sein soll. Dies bedeutet, dass zu dieser Zeit keine Arbeitsaufträge ausgeführt werden sollen. Dieses Zeitintervall ist in Figur 7C schraffiert hinterlegt. Beispielsweise könnte für die Planung aus Figur 7C die gleiche Planung genutzt werden, wie in Figur 7B (Roboter beginnt mit Aufgabe im Teilgebiet *Bedroom* R10 gefolgt von der Aufgabe im Teilgebiet *Hallway* R20) mit der Abänderung, dass die Aufgabe im Teilgebiet *Living Room* R30 erst um 13:00 Uhr gestartet werden würde. Der Roboter hätte somit zwischen der Reinigung des Gebiets *Hallway* R20 und der Reinigung des Teilgebiets *Living Room* R30 sehr viel Zeit während welcher gar keine Teilaufgabe erledigt würde. Bis zur vollständigen Bearbeitung des gesamten Arbeitsauftrages würde somit sehr viel Zeit vergehen.

Beispielsweise durch Variation der Reihenfolge der Abarbeitung der Teilaufgaben und der hiermit verbundenen Ladepausen kann festgestellt werden, dass ein Ausführen der Teilaufgabe im Teilgebiet *Living Room* R30 dazu führt, dass die hiermit verbundene Ladepause mit dem vom Nutzer gewählten Zeitintervall des Schlafmodus stark überlappt. Hierdurch wird die Zeit des Schlafmodus dahingehend "produktiv" genutzt indem die Ressourcen des Roboters aufgeladen werden. Der gesamte Arbeitsauftrag ("Reinige die Wohnung") des Nutzers kann somit durch die geänderte Reihenfolge der Teilaufgaben früher komplett abgeschlossen werden. Hierdurch erhöht sich die Effizienz des Systems und dadurch auch die Nutzerzufriedenheit.

Figur 7D zeigt ein weiteres Beispiel für einen möglichen Arbeitsplan. Beispielsweise kann der Nutzer wünschen, dass als erstes Gebiet das Teilgebiet *Bedroom* R10 und anschließend das Teilgebiet *Living Room* R30 gereinigt wird. Entsprechend wird als Letztes das Teilgebiet *Hallway* R20 eingeplant. Nach der Reinigung des Teilgebiets *Bedroom* R10 stehen nicht mehr die für die Reinigung des Teilgebiets *Living Room* R30 erforderlichen 80 % Kapazität des Akkus zur Verfügung. Deshalb wird nach Erledigung der ersten Teilaufgabe ein Laden des Akkus eingeplant. Nach der Reinigung des Teilgebiets *Living Room* R30 stehen nicht mehr die für die Reinigung des Teilgebiets *Hallway* R20 erforderlichen 25 % Kapazität des Akkus zur Verfügung. Deshalb wird nach Erledigung der zweiten Teilaufgabe ein weiteres Laden des Akkus eingeplant. Jedoch ist für die verbleibende Aufgabe der Reinigung des Teilgebiets *Hallway* R20 kein vollständig geladener Akku notwendig, weshalb das in Figur 7D gezeigte Vorgehen sehr ineffizient und zeitaufwendig ist. Deshalb kann der Roboter beispielsweise zwei oder mehr unterschiedliche Ladeprogramme besitzen, wobei das passende Ladeprogramm basierend auf dem Arbeitsplan gewählt wird. Beispielsweise kann ein standardmäßiges Ladeprogramm den Akku vollständig aufladen. Bei einem Schnellladeprogramm (*rapid charging program*) kann beispielsweise der Akku unvollständig (teilweise) geladen werden. Der Akku kann beispielsweise nicht auf die vollen 100% geladen werden. Hierbei wird Zeit gespart, indem dem Akku weniger Energie zugeführt werden muss. Zudem kann im mittleren Ladebereich dem Akku meist schneller Energie zugeführt werden. Beispielsweise kann eine besonders hohe Stromstärke genutzt werden. Hierbei ist jedoch zu beachten, dass sich dies negativ auf die Lebenserwartung des Akkus auswirken kann.

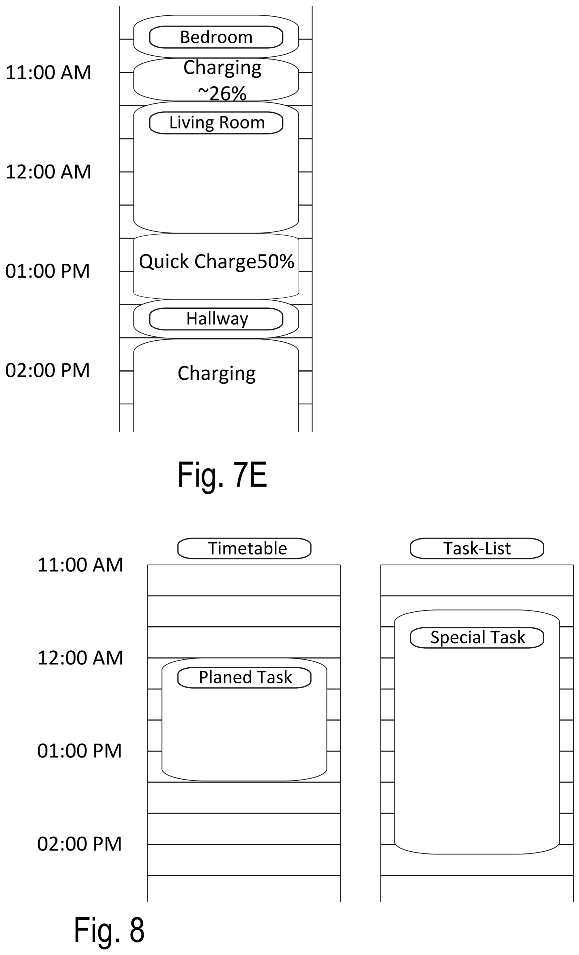

Beispielsweise kann der Lademodus basierend auf der geschätzten benötigten Energie für die Verrichtung der verbleibenden bzw. nachfolgenden Teilaufgaben gewählt werden. Figur 7E zeigt beispielhaft einen Arbeitsplan, bei dem ein Schnellladeprogramm nach der Reinigung des Teilgebiets *Living Room* R30 gewählt wird. Beispielsweise kann der Akku hierbei lediglich um 50 % geladen werden. Alternativ oder zusätzlich kann die für die Verrichtung der nächsten bzw. ausstehenden Aufgaben benötigte Energie bestimmt werden. Der Akku kann dann soweit aufgeladen werden, dass diese Energie zuzüglich eines Sicherheitspuffers zur Verfügung steht. Wird für die Reinigung des Teilgebietes *Hallway* R20 beispielsweise eine Akku-Kapazität von 25% benötigt, kann der Akku vor dem Durchführen der Teilaufgabe "Reinige *Hallway*" beispielsweise um 50% auf beispielsweise insgesamt etwa 70% geladen werden. Der Akku ist dann zwar nicht vollständig geladen, die 70% Akku-Kapazität bieten jedoch einen ausreichenden Puffer für die voraussichtlich benötigten 25% für die Teilaufgabe. Ein Laden von Energie, die nicht für die Verrichtung der Aufgabe benötigt wird, kann so vermieden werden, wodurch weniger Zeit für das Laden benötigt wird, und die Abarbeitung aller Teilaufgaben schneller beendet werden kann.

Zusätzlich oder alternativ kann der Roboter ein Programm zur besonders schonenden Ladung des Akkus besitzen. Dieses kann beispielsweise abhängig vom Aktivitätsmodus (Robotermodus) des Roboters gewählt werden. Dieses kann beispielsweise im Schlafmodus gewählt werden. Bei einem solchen Schonladeprogramm kann der Akkus beispielsweise sehr langsam geladen werden. Beispielsweise kann der Akku so weit geladen werden, wie dies optimal für eine Lagerung ist. Anschließend kann in geeigneten Abständen eine Erhaltungsladung vorgenommen werden. Es kann festgestellt werden, wann der Schlafmodus endet und der Akku möglichst schonend so geladen werden, dass am Ende des Schlafmodus der Akku vollständig geladen und der Roboter voll einsatzbereit ist. Hierdurch kann die Lebenserwartung des Akkus verlängert und gegebenenfalls negative Effekte eines Schnellademodus kompensiert werden.

Zusätzlich oder alternativ können für die Wahl des Ladeprogramms weitere Informationen berücksichtigt werden. Diese können ein zu erwartender und/oder ein aktueller Strompreis sein. So kann z.B. basierend auf dem Arbeitsplan festgestellt werden, dass ein Einsatz des Roboters in einem bestimmten Zeitintervall nicht zu erwarten ist. Basierend auf der zu erwartenden Entwicklung des Strompreises kann festgestellt werden, wann das Nachladen des Akkus am billigsten ist, und entsprechend durchgeführt werden. Beispielsweise bieten manche Stromanbieter flexible Preise an, welche sich in Abhängigkeit von der Uhrzeit ändern. Alternativ oder zusätzlich kann der Nutzer eigene Energiequellen wie eine Solaranlage besitzen, deren direkte Nutzung zu bestimmten Zeitpunkten möglicherweise kostengünstiger ist.

Ein autonomer mobiler Roboter kann selbstständig (ohne oder mit geringen Eingriffen des Nutzers) die für ihn vorgesehen Arbeitsaufträge wann immer möglich verrichten. Gleichzeitig soll der Roboter durch seine Aktivität einen Nutzer in der Regel nicht stören. Hieraus ergibt sich das Problem, dass der Roboter a priori nicht "weiß", zu welchem Zeitpunkt die Erfüllung einer Aufgabe nützlich oder störend ist. Ein Reinigungsroboter, der das Schlafzimmer reinigt, kann beispielsweise nützlich bzw. nicht störend sein, solange er die Reinigung nicht zur Schlafenszeit der Nutzer durchführt. Ein Überwachungsroboter, der auf Patrouillen nach Einbrechern und anderen Gefahren wie einem angelassenen Herd schaut, kann beispielsweise nützlich bzw. nicht störend sein, solange er den Arbeitsauftrag nicht während der Zubereitung von Speisen durch den Nutzer und weiterer Personen durchführt.

Wie zuvor bereits beschrieben, können für die Arbeitsplanung Vorgaben gemacht werden, beispielsweise zu welchen Zeiten der Roboter Aufgaben erfüllen darf/soll. Die Planung kann durch allgemeine Regeln zu diesen Zeiten vereinfacht werden. So können Aktivitätsmodi für bestimmte Zeitintervalle vorgegeben werden, bei denen dem Roboter bestimmte Verhaltensmuster zugewiesen sind, so wie dies beispielhaft in Figur 5 dargestellt ist. Beispielsweise kann ein Zeitintervall mit einem Arbeitsmodus (*work mode*) verknüpft werden, während dem der Roboter autonom seine Arbeit verrichten kann. In diesem Zeitintervall sollen alle automatisch generierten Teilaufgaben des Roboters eingeplant und durchgeführt werden. Beispielsweise ist dies die Zeit, wenn alle Nutzer außer Haus sind.

Beispielsweise kann ein weiteres Zeitintervall festgelegt werden, in welchem sich der Roboter in einem Bereitschaftsmodus (*ready mode*) befindet. In dieser Zeit soll der Roboter beispielsweise keine Aufgaben selbstständig starten oder einplanen, da die Nutzer anwesend sind. Jedoch soll der Roboter jederzeit bereit sein, eine Aufgabe auf Anweisung des Nutzers zu verrichten. Das heißt beispielsweise, dass der Akku möglichst vollständig geladen sein sollte und ein Schmutzbehälter entleert worden sein sollte.

Beispielsweise kann auch ein Zeitintervall festgelegt werden, in welchem der Roboter voraussichtlich keine Tätigkeit verrichten und insbesondere nicht selbsttätig starten oder einplanen soll, und sich dafür in einem Schlafmodus (*sleep mode*) befindet. In dieser Zeit muss beispielsweise der Akku des Roboters nicht vollständig geladen werden. Vielmehr kann ein Ladeprogramm gewählt werden, welches auf eine lange Lebenszeit des Ackus optimiert ist. Beispielsweise kann der Roboter in einen besonders energiesparenden Modus geschaltet werden, bei dem er einige Zeit benötigt, (z. B. zum Laden und Starten bestimmter Softwaremodule) bis er voll einsatzfähig ist.

Die eingestellten Aktivitätsmodi können für einen oder für mehrere autonome mobile Roboter gelten. Beispielsweise können auch verschieden Roboter ein und denselben Aktivitätsmodus (Robotermodus) unterschiedlich interpretieren. Beispielsweise kann ein Überwachungsroboter während des Bereitschaftsmodus in eine Schlafphase gehen. Während des Arbeitsmodus würde er Patrouillen fahren und verdächtige Ereignisse (Einbruch, Feuer) an einen Sicherheitsdienst und/oder über ein Mobilgerät an den Nutzer senden. Während des Schlafmodus würde der Überwachungsroboter ebenfalls Patrouillen fahren. Jedoch würde z. B. bei verdächtigen Ereignissen (Einbruch, Feuer) zusätzlich ein akustischer Alarm ausgelöst, der den Nutzer weckt und alarmiert. Für andere Serviceroboter, wie beispielsweise einen Telepräsenzroboter oder einen Transportroboter, kann mit einem Bereitschaftsmodus verbunden sein, dass nach jedem Einsatz der Akku mit einem Schnellladeprogramm geladen wird. Hierdurch steht der Roboter dem Nutzer schneller wieder zur Verfügung.

Die verschiedenen Aktivitätsmodi kann der Nutzer beispielsweise mit festen Zeitvorgaben verknüpfen. Beispielsweise kann der Nutzer von 9:00 Uhr bis 18:00 Uhr standardmäßig außer Haus sein und erwarten, dass der Roboter währenddessen seine Aufgaben verrichtet. Entsprechend würde er für diese Zeit beispielsweise den Arbeitsmodus aktivieren. Z.B. von 18:00 Uhr bis 24:00 Uhr ist der Nutzer zu Hause und will vom Roboter nicht gestört werden. Jedoch kann es sein, dass der Roboter benötigt wird, um bei Bedarf nach dem Essen um den Esstisch herum zu reinigen, weshalb der Bereitschaftsmodus für den Roboter gewählt werden kann. Z. B. von 00:00 Uhr bis 9:00 Uhr schlafen alle Nutzer, weshalb der Roboter nicht benötigt wird und in den Schlafmodus versetzt werden kann.

Alternativ oder zusätzlich können die Zeitvorgaben für bestimmte Wochentage individuell eingestellt werden. So kann beispielsweise am Wochenende der Arbeitsmodus reduziert werden und beispielsweise zu einem späteren Zeitpunkt (z.B. 11:00 Uhr) beginnen, so dass die Nutzer ausschlafen können. Beispielsweise kann am Wochenende der Arbeitsmodus auch komplett deaktiviert werden und der Roboter sich stattdessen nur in Bereitschaft befinden. Wenn ein Reinigungsroboter in einem Büro eingesetzt wird, kann beispielsweise am Wochenende der Schlafmodus, während der Arbeitszeit ein Bereitschaftsmodus, und in den Nachtstunden der Arbeitsmodus aktiv sein. Alternativ oder zusätzlich können die Zeitvorgaben einmalig für eine vom Nutzer gewählte Zeit aktiviert werden. Beispielsweise kann der Nutzer in den Urlaub fahren und in dieser Zeit den Roboter nicht benötigen. Hierfür kann er den Roboter beispielsweise für die Dauer des Urlaubs (z. B. 2 Wochen) in den Schlafmodus versetzen. Wenn der Roboter über ein Schonladeprogramm verfügt, kann der Akku des Roboters automatisch während dieser Urlaubszeit besonders schonend gelagert und geladen werden. Hierdurch wird der Energieverbrauch des Roboters minimiert und die Lebenserwartung des Akkus verlängert.

Alternativ oder zusätzlich können die Aktivitätsmodi an andere Ereignisse wie beispielsweise Aktionen des Nutzers oder anderer Geräte geknüpft werden. Die Ereignisse wie beispielsweise Aktionen des Nutzers können beispielsweise direkt vom Roboter oder mit Hilfe weiterer Geräte und Sensoren eines Smart-Home-Systems erkannt werden. Beispielsweise kann mit so genannten Schlaftrackern detektiert werden, wann der Nutzer schläft und aufwacht. Hierbei kann eine entsprechende Mitteilung an den Roboter erfolgen, worauf dieser beispielsweise aus dem Schlafmodus in den Bereitschaftsmodus wechselt. Es sind ebenfalls Methoden bekannt, um zu erkennen, wenn ein Nutzer das Haus verlässt bzw. betritt. Dies kann beispielsweise den Wechsel vom Bereitschaftsmodus in den Arbeitsmodus (bzw. umgekehrt) aktivieren.

Bei derart flexiblen Aktivitätsmodi kann es vorkommen, dass eine geplante Tätigkeit nicht mehr (vollständig) ausgeführt werden kann, da beispielsweise der Nutzer früher Heim kommt. Beispielsweise kann der Roboter bei Ankunft des Nutzers gerade das Wohnzimmer reinigen. Mit der Ankunft des Nutzers zu Hause kann das Wechseln des Roboters aus dem Arbeitsmodus in den Bereitschaftsmodus verknüpft sein. Mit dem Wechsel in den Bereitschaftsmodus kann der Roboter beispielsweise die Reinigung unterbrechen und auf einen späteren Zeitpunkt verschieben, wenn der Arbeitsmodus wieder aktiv wird. Beispielsweise kann der Nutzer kurze Zeit später die Wohnung wieder verlassen, worauf hin der Arbeitsmodus des Roboters wieder aktiv wird, wodurch der Roboter seine Aufgabe fortsetzen kann. Ob eine Aufgabe fortgesetzt oder neu gestartet wird, kann davon abhängig sein wie lange die Aufgabe unterbrochen war. Beispielsweise kann die Aufgabe fortgesetzt werden (bereits erledigte Tätigkeiten werden nicht wiederholt), wenn der Roboter noch am gleichen Tag die Arbeit wieder aufnimmt. Wenn die Aufgabe auf einen nachfolgenden Tag verschoben wird, kann sie beispielsweise komplett neu gestartet werden (auch bereits erledigte Tätigkeiten werden wiederholt). Hierbei kann geprüft werden, ob die Aufgabe (insbesondere Reinigung) an diesem Tag schon geplant ist. Dann kann beispielsweise nur die für diesen Tag bereits geplante Aufgabe ausgeführt werden und die verschobene Aufgabe kann beispielsweise gelöscht werden, ohne dass sie bis zum Ende ausgeführt wurde. Alternativ kann auch die verschobene Aufgabe ausgeführt werden, und die zu einem späteren Zeitpunkt geplante Aufgabe wird unterlassen. Alternativ oder zusätzlich kann die Aufgabe mit einer höheren Intensität (z. B. Saugleistung) durchgeführt werden.

Flexible Aktivitätsmodi können beispielsweise vorteilhaft für Überwachungsroboter sein. Hierdurch kann gezielt die Überwachungsaufgabe an die Aktivität und/oder Anwesenheit des Nutzers geknüpft werden. Beispielsweise kann so sichergestellt werden, dass der Überwachungsroboter solange Patrouillen fährt, wie der Nutzer außer Hause ist. Ein starres und unflexibles Einprogrammieren fester Arbeitszeiten wird vermieden.

Ein weiteres Anwendungsbeispiel für flexible Aktivitätsmodi ist ein Roboter zur persönlichen Assistenz im Haushalt. Beispielsweise ist der Roboter dazu ausgebildet ein von einer anderen Person vorbereitetes Frühstück an das Bett einer pflegebedürftigen Person zu bringen. Zusätzlich oder alternativ kann der Roboter auch selbstständig einige Vorbereitungen durchführen, wie beispielsweise einen Kaffee mit Hilfe eines Kaffeevollautomaten zuzubereiten. Mit Hilfe eines Schlaftrackers kann erkannt werden, wann die pflegebedürftige Person aufwacht. Dies führt zu einem Aktivitätswechsel des Assistenzroboters in einen Arbeitsmodus. Als erste Aufgabe im Arbeitsmodus ist die Aufgabe "Bringe Frühstück" eingeplant. Diese wird somit automatisch aktiv, wenn die Person aufwacht. Ein umständliches separates Programmieren kann entfallen.

Es sei angemerkt, dass Vorgaben für den Aktivitätsmodus für einzelne Roboter verschieden oder für mehrere Roboter gleich zugeteilt werden können. Zudem können die Vorgaben für den Aktivitätsmodus für alle Karten (z.B. für alle Stockwerke eines Hauses), für nur eine Karte (z.B. ein Stockwerk) und/oder für einzelne Teilgebiete gemacht werden. So kann beispielsweise die Vorgabe so gemacht werden, dass Nachts (00:00 Uhr bis 9:00 Uhr) im Stockwerk, in dem das Schlafzimmers liegt, der Schlafmodus aktiv ist. Währenddessen kann in den anderen Stockwerken der Arbeitsmodus aktiv sein. In einem weiteren Beispiel könnte der Schlafmodus auch nur auf das Schlafzimmer bezogen werden.

Im täglichen Gebrauch eines Roboters wird dieser in der Regel neben regelmäßig auszuführenden und entsprechend in einem Kalender geplanten Arbeitsaufträgen auch außerplanmäßige Arbeitsaufträge zur sofortigen autonomen Verrichtung von einem Nutzer oder von anderen Geräten erhalten. Ein solcher Arbeitsauftrag kann beispielsweise durch den Roboter entgegengenommen werden und mit hoher Priorität abgearbeitet werden. Figur 8 zeigt, dass sich ein außerplanmäßiger Arbeitsauftrag (*special task*) mit einem geplanten Arbeitsauftrag (*planed task*) überschneiden kann. Hierbei kann es zu folgenden Problemen kommen. Beispielsweise kann der geplante Arbeitsauftrag wie geplant (z. B. 12:00 Uhr) aktiviert und der außerplanmäßige Arbeitsauftrag gleichzeitig abgebrochen werden. Dies kann jedoch ein potentiell unerwünschtes Verhalten darstellen, wenn der Nutzer eine bestimmte Absicht mit dem außerplanmäßigen Arbeitsauftrag verbunden hat. Alternativ können während der Abarbeitung eines außerplanmäßigen Arbeitsauftrags alle geplanten Arbeitsaufträge ignoriert werden. Dies ist jedoch ebenso ein potentiell unerwünschtes Verhalten, wenn der Nutzer sich darauf verlässt, dass ein geplanter Arbeitsauftrag auch ausgeführt wird.

Um diese Probleme zu umgehen, kann geprüft werden, ob der entgegengenommene außerplanmäßige Arbeitsauftrag sich zeitlich mit einem geplanten Arbeitsauftrag überschneidet. Falls es zu einer zeitlichen Überschneidung kommt, kann entschieden werden, ob und wann der geplante Arbeitsauftrag ausgeführt wird. Beispielsweise kann der geplante Arbeitsauftrag im Anschluss an den außerplanmäßigen Arbeitsauftrag ausgeführt werden. Der geplante Arbeitsauftrag wird also zeitlich nach hinten verschoben. Bei der Verschiebung eines geplanten Arbeitsauftrags können in einem Kalender hinterlegte allgemeine Planungsvorgaben und insbesondere Aktivitätsmodi beachtet werden, wie weiter oben bereits beispielhaft beschrieben wurde. Beispielsweise kann der geplante Arbeitsauftrag nicht derart verschoben werden, dass er während des Schlafmodus ausgeführt werden würde. Beispielsweise kann der geplante Arbeitsauftrag nur so verschoben werden, dass er während des Arbeitsmodus ausgeführt wird. Dies bedeutet, wenn nach Abschluss des außerplanmäßigen Arbeitsauftrags keine oder nicht genügend Zeit im Arbeitsmodus zur Verfügung steht, um den geplanten Arbeitsauftrag abzuarbeiten, wird dieser auf den nächsten freien Zeitpunkt verschoben, an dem der Arbeitsmodus aktiv ist. Insbesondere kann der geplante Arbeitsauftrag auf den nächsten Tag verschoben werden.

Es gibt beispielsweise Arbeitsaufträge die täglich ausgeführt werden sollen. Hierbei kann es unerwünscht sein einen solchen geplanten sich täglich wiederholenden Arbeitsauftrag auf den nächsten Tag zu verschieben und so an dem nächsten Tag doppelt auszuführen. In solch einem Fall kann beispielsweise der geplante Arbeitsauftrag aufgrund des außerplanmäßigen Arbeitsauftrags entfallen. Zusätzlich kann beispielsweise der geplante Arbeitsauftrag am nächsten Tag gründlicher (z. B. mit stärkerer Saugleistung) ausgeführt werden. In einigen Fällen kann der außerplanmäßige Arbeitsauftrag den geplanten Arbeitsauftrag zumindest teilweise umfassen. In solch einem Fall kann der Teil des geplanten Arbeitsauftrags entfallen, der in dem außerplanmäßigen Arbeitsauftrag enthalten ist. Hierbei ist die zuvor beschriebene Aufteilung von Arbeitsaufträgen in Teilaufgaben geeignet, um die Analyse zu vereinfachen, ob ein erster Arbeitsauftrag einen zweiten Arbeitsauftrag zumindest teilweise umfasst. Dies wird an den zwei nachfolgenden Beispielen verdeutlicht.

Beispielsweise kann geplant sein, das Teilgebiet *Hallway* R20 zu reinigen. Nun gibt der Nutzer die Anweisung "Reinige die Wohnung", welche wie zuvor beschrieben in die Teilaufgaben, die Teilgebiete *Bedroom* R10, *Hallway* R20 und *Living Room* R30 zu reinigen, zerlegt wird. Nun kann festgestellt werden, dass die hierbei erzeugte Teilaufgabe der Reinigung des Teilgebiets *Hallway* R20 dem geplanten Arbeitsauftrag entspricht.

In einem analogen Beispiel kann geplant sein, die gesamte Wohnung zu reinigen, wobei diese Aufgabe in die Teilaufgaben, die Teilgebiete *Bedroom* R10, *Hallway* R20 und *Living Room* R30 zu reinigen, zerlegt ist. Nun kann der Nutzer beispielsweise die Anweisung geben das Teilgebiet *Living Room* R30 zu reinigen. Es wird geprüft, ob sich der entgegengenommene außerplanmäßige Arbeitsauftrag ("Reinige *Living Room*") zeitlich mit dem geplanten Arbeitsauftrag ("Reinige Wohnung") überschneidet. Hierbei kann beispielsweise festgestellt werden, dass während der Ausführung der Reinigung des Teilgebiets *Living Room* R30 der geplante Auftrag der Reinigung der Wohnung mit der Reinigung der Teilgebiete *Bedroom* R10 und *Hallway* R20 beginnen würde. Auch wenn die geplante Teilaufgabe der Reinigung des Teilgebiets *Living Room* R30 sich nicht mit dem außerplanmäßigen Arbeitsauftrag ("Reinige *Living Room*") zeitlich überschneidet, kann in diesem Fall dieser Teil des geplanten Arbeitsauftrag entfallen. Das bedeutet, es würde entsprechend der Nutzeranweisung zuerst das Teilgebiet *Living Room* R30 gereinigt. Anschließend würde der verbleibende geplante Arbeitsauftrag mit den Teilaufträgen der Reinigung der Teilgebiete *Bedroom* R10 und *Hallway* R20 abgearbeitet (gegebenenfalls nach einer Pause zum Aufladen des Akkus).

Heutige autonome mobile Roboter im Haushalt sind meist nicht in der Lage völlig ohne die Hilfe eines Nutzers auszukommen. Beispielsweise muss der Nutzer einen Schmutzbehälter leeren, Sensoren, Bürsten oder andere Bauteile des Roboters regelmäßig reinigen, oder den Roboter per Hand z.B. in ein anderes Stockwerk umsetzen. Es ist kann nützlich sein, den Nutzer an diese Tätigkeiten zu erinnern, um eine störungsfreie und autonome Tätigkeit des Roboters zu ermöglichen. Beispielsweise werden dem Nutzer in regelmäßigen Abständen Erinnerungen gesandt. Jedoch werden solche Erinnerungen möglicherweise auch dann gesendet, wenn dies nicht unbedingt notwendig ist, wodurch der Nutzer gestört werden kann. Um dies zu vermeiden, kann der Roboter beispielsweise Sensoren besitzen, um die Notwendigkeit eines Nutzereingriffs festzustellen. So kann beispielsweise festgestellt werden, dass der Schmutzbehälter voll ist, und es kann daraufhin eine Nachricht an den Nutzer gesendet werden. Jedoch kann diese Nachricht den Nutzer möglicherweise zu einer ungünstigen Zeit (insbesondere wenn er nicht zu Hause ist) erreichen, so dass er nicht sofort den Schmutzbehälter reinigen kann. Zu einem späteren Zeitpunkt kann er die Nachricht vergessen haben, so dass die Erinnerung ohne Erfolg ist.

Damit eine Erinnerung wirklich hilfreich für einen Nutzer ist, kann sie beispielsweise zu einem geeigneten Zeitpunkt und nur bei Bedarf abgesandt werden. Hierzu können geeignete Zeitpunkte für das Senden von Erinnerungen beispielsweise in einem elektronischen Kalender gespeichert werden. Solch ein Zeitpunkt liegt beispielsweise am Morgen bevor der Nutzer das Haus verlässt, oder abends bevor der Nutzer schlafen geht. Zu diesen Zeitpunkten kann geprüft werden, ob eine Erinnerung notwendig ist. Hierzu können eine oder mehrere Bedingungen geprüft werden, bei deren Erfüllung eine Erinnerung an den Nutzer gesandt wird.

Beispielsweise kann geprüft werden, ob ein Schmutzbehälter zu voll ist oder ob eine Reinigungsflüssigkeit nachgefüllt werden muss. Hierbei ist auch ein Schmutzbehälter oder Flüssigkeitsbehälter an einer Basisstation gemeint, an der der Roboter selbstständig Schmutz abladen oder eine Reinigungsflüssigkeit nachfüllen kann. Zusätzlich kann geprüft werden, ob zu erwarten ist, dass eine geplante Aufgabe mit den vorhandenen Ressourcen erfüllt werden kann. Beispielsweise kann eine Erinnerung an den Nutzer gesendet werden, wenn der Schmutzbehälter noch nicht voll ist aber zu erwarten ist, dass nach der Hälfte der geplanten Tätigkeit kein Schmutz mehr aufgenommen werden kann. Hierbei können beispielsweise die Erfahrungswerte der Schmutzaufnahme der letzten Arbeitseinsätze genutzt werden (z.B. mittlere Schmutzaufnahme der letzten zehn Einsätze). Dieses Vorgehen kann auf alle messbaren Ressourcen des Roboters angewandt werden.

Beispielsweise kann auch geprüft werden, wann der Nutzer das letzte Mal den Roboter gewartet also insbesondere Sensoren und Aktoren (Räder, Bürsten, etc.) gereinigt hat. Wenn diese Zeit einen vorgebbaren Wert überschritten hat und/oder der Roboter seit der letzten Wartung eine vorgebbare Laufzeit überschritten hat, kann eine Erinnerung an den Nutzer gesendet werden.

Es kann einige Bedingungen geben, die nur geprüft werden können, wenn der Roboter sich in der Umgebung bewegt. Beispielsweise kann der Roboter die geplante Aufgabe haben, ein bestimmtes Zimmer (Teilgebiet) zu reinigen, wofür der Nutzer eine Tür öffnen muss, bevor er die Wohnung verlässt. Hierzu kann der Roboter, kurz bevor der Nutzer die Wohnung planmäßig verlässt, zu dem Zimmer fahren und prüfen, ob die Tür geöffnet wurde. Wenn die Tür verschlossen vorgefunden wird, wird eine Erinnerung gesandt. So kann vermieden werden, dass der Roboter standardmäßig jeden Morgen eine Erinnerung an den Nutzer sendet, dass dieser die Türe öffnen soll, obwohl die Tür geöffnet ist und eine Erinnerung nicht nötig wäre.

Ein weiteres Beispiel ist, dass der Roboter eine geplante Aufgabe in einem bestimmten Stockwerk planmäßig verrichten soll, welches der Roboter nur durch das Hintragen durch einen Nutzer erreichen kann. Hierzu kann der Roboter, kurz bevor der Nutzer die Wohnung planmäßig verlässt, prüfen, ob er sich im richtigen Stockwerk befindet. Hierzu kann eine Selbstlokalisierung notwendig sein. Bei der Selbstlokalisierung kann eine Bewegung des Roboters im Einsatzgebiet notwendig sein. Wenn der Roboter feststellt, dass er sich nicht im richtigen Einsatzgebiet (Stockwerk) befindet, so kann eine Erinnerung an den Nutzer gesandt werden.

Zusätzlich zum Senden einer Erinnerung kann sich der Roboter zu einem vorgebbaren Ort bewegen. Wenn beispielsweise der Schmutzbehälter gereinigt werden soll, kann sich der Roboter zu einem Ort in der Nähe des Abfalleimers bewegen, so dass dem Nutzer das Entleeren vereinfacht wird. Wenn beispielsweise der Roboter in einen anderen Stock getragen werden muss, kann sich der Roboter zu einem Ort in die Nähe der Treppe bewegen, so dass der Weg für den Nutzer verkürzt wird.

Beispielsweise kann geprüft werden, ob der Nutzer anwesend ist. Dies stellt sicher, dass der Nutzer auf die Erinnerung reagieren kann. Die Prüfung kann über Geräte eines Smart-Home geschehen wie beispielsweise Türschlösser, die ein Verlassen der Wohnung durch den Nutzer registrieren. Alternativ oder zusätzlich kann geprüft werden, ob sich ein mobiles Gerät (z.B. Smartphone, Smartwatch, sonstige "Wearables") welches der Nutzer gewöhnlich mit sich führt im lokalen Netzwerk (WLAN) angemeldet ist. Alternativ oder zusätzlich kann der Roboter dazu ausgebildet sein, beispielsweise in Bildern einer Kamera den Nutzer zu erkennen. Daraufhin kann der Roboter herumfahren und prüfen, ob er den Nutzer findet. Der Roboter kann auch ohne vorherige Lokalisierung anhand von Kamerabildern umherfahren und anhand von Bewegungssensoren versuchen den Nutzer zu lokalisieren. Wenn der Nutzer anwesend ist, kann eine Erinnerung an den Nutzer gesendet werden. Insbesondere wenn der Roboter den Nutzer gefunden hat, kann diese Erinnerung beispielsweise auch in Form eines akustischen Signals wie beispielsweise einer persönlichen Ansprache erfolgen. Wenn festgestellt wird, dass der Nutzer nicht anwesend ist, kann die Erinnerung auf einen anderen Zeitpunkt verschoben werden. Insbesondere kann die Erinnerung abgesendet werden, wenn der Nutzer zu einem späteren Zeitpunkt gefunden wird, beispielsweise wenn der Nutzer nach Hause kommt.

Zur Erfüllung einiger Aufgaben kann schon bei der Planung absehbar sein, dass ein vorhergehender Nutzereingriff beispielsweise in Form der Öffnung einer Tür oder in Form des Versetzen des Roboters in einen anderen Stock erforderlich sein wird. Beispielsweise beim Einplanen einer Aufgabe, kann geprüft werden, ob ein Nutzereingriff notwendig sein kann. In solch einem Fall kann dem Nutzer vorgeschlagen werden, eine Erinnerung einzuplanen. Hierbei kann ein Zeitpunkt für die Erinnerung vorgeschlagen werden, der vor dem geplanten Start der Aufgabe liegen sollte. Es kann auch automatisch eine Erinnerung eingeplant werden. Da diese nur bei Bedarf abgesendet wird, führt dies nicht zu einer unerwünschten Störung des Nutzers. Beispielsweise kann der Roboter bei dem Versuch der Abarbeitung einer regelmäßig geplanten Aufgabe feststellen, dass dies nicht ohne einen Eingriff des Nutzers möglich ist. Entsprechend kann dem Nutzer vorgeschlagen werden, eine Erinnerung einzuplanen, wobei ein Zeitpunkt für die Erinnerung vorgeschlagen werden kann oder es kann automatisch eine Erinnerung eingeplant werden.

In einem weiteren Beispiel kann der Erfolg einer Erinnerung festgestellt werden, also insbesondere ob ein Nutzereingriff nach einer Erinnerung tatsächlich erfolgt ist. Das heißt beispielsweise, dass ein Staubbehälter geleert, eine Tür geöffnet oder der Roboter versetzt oder gewartet wurde. Wenn eine Erinnerung nicht zu einem Nutzereingriff führt, kann dies an einem ungünstigen Zeitpunkt für die Erinnerung liegen. Entsprechend kann dem Nutzer eine Verschiebung der geplanten Erinnerung oder eine zusätzliche geplante Erinnerung vorgeschlagen werden. Insbesondere kann ein neuer Zeitpunkt vorgeschlagen werden. Alternativ kann der Roboter auch automatisch den Zeitpunkt der Erinnerung ändern (verschieben), oder eine zusätzliche Erinnerung einplanen.

Im täglichen Gebrauch eines autonomen mobilen Roboters 100 kann beispielsweise festgestellt werden, dass eine Aufteilung einer Umgebung in Teilgebiete im täglichen Gebrauch unpassend ist. Häufig ist dies der Fall, wenn eine Aufgabe nicht gemäß der Vorgaben verrichtet werden kann. Dies sind beispielsweise Vorgaben durch den Nutzer, wie beispielsweise die Anforderung, eine Aufgabe bis zu einer vorgegebenen Zeit zu erfüllen. Ein weiteres Beispiel sind Vorgaben, die sich aus den beschränkten Ressourcen des Roboters ergeben, wie beispielsweise, dass der Akku des Roboters nicht genügend Energie für die vollständige Erledigung einer Teilaufgabe aufweist. Hier könnte der Roboter zwar während der Abarbeitung der Teilaufgabe zur Basisstation zurückkehren und den Akku nachladen. Jedoch würde das Verhalten des Roboters hierdurch insgesamt weniger vorhersehbar und somit weniger planbar.

Für eine solche nicht erfüllbare Vorgabe kann es verschieden Gründe geben. Beispielsweise kann der Roboter nach einer Lernfahrt eine Vorhersage für die Reinigungszeit und/oder den Energieverbrauch gemacht haben, die in der Praxis nicht eingehalten werden kann. Beispielsweise können während der Lernfahrt Hindernisse wie Stühle vom Nutzer vorher aus dem Weg geräumt worden sein, die beim täglichen Einsatz jedoch beachtet und umfahren werden müssen. Dadurch kann sich die Einsatzzeit und der Energieverbrauch vergrößern und hierdurch beispielsweise die Kapazität des verwendeten Akkus zur Speicherung von Energie ungenügend sein, um die Aufgabe mit einer Akku-Ladung zu schaffen. Beispielsweise kann durch Alterserscheinungen die Kapazität des verwendeten Akkus des Roboters reduziert werden, wodurch nicht mehr genug Energie gespeichert werden kann, um die Aufgabe mit einer Akku-Ladung zu schaffen. Beispielsweise kann der Nutzer einen anderen Parameter für die Bearbeitung der Aufgabe vorgeben wie z. B. eine erhöhte Gründlichkeit der Reinigung, z.B. eine erhöhte Saugleistung. Hierdurch kann sich die Dauer des Einsatzes und/oder die benötigte Energie so stark erhöhen, dass die Aufgabe nicht mehr oder nicht mehr sicher erfüllt werden kann.

Damit der Roboter basierend auf den Teilgebieten neue Teilaufgaben erstellen kann welche entsprechend den Vorgaben erfüllt werden können, kann dem Nutzer vorgeschlagen werden, eine neue Aufteilung zu erstellen. Alternativ oder zusätzlich kann auch der Nutzer feststellen, dass eine Teilaufgabe beispielsweise zu viel Zeit in Anspruch nimmt. So kann der Nutzer die Anweisung geben eine Teilaufgabe dadurch aufzuteilen, indem die zugrundeliegende Aufteilung des Einsatzgebiets in Teilgebiete neu erstellt wird, so dass beispielsweise jede Teilaufgabe in einer vorgebbaren Zeit (z.B. 30 min) erfüllbar ist.

In dem in Figur 4 dargestellten Beispiel ist das Teilgebiet *Living Room* R30 sehr groß und benötigt entsprechend viel Zeit und Energie zur Reinigung. Beispielsweise eine Änderung der Einstellung für die Saugstärke (*power*) oder die Häufigkeit der Reinigung einer Stelle (*coverage*) würde dazu führen dass die Reinigung sehr lange dauert und/oder der Akku nicht genügend Energie zur Verfügung stellt.

Im einfachsten Fall kann zur Erstellung einer neuen Aufteilung das bestehende Teilgebiet, welches nicht entsprechend den Vorgaben bearbeitet werden kann, in zwei oder mehr Teilgebiete aufgeteilt werden. Hierzu können beispielsweise die bekannten Verfahren zur Aufteilung eines Einsatzgebiets eines Roboters in Teilgebiete verwendet werden. Für die so neu erstellten Teilgebiete kann geprüft werden, ob die entsprechenden Teilaufgaben gemäß den Vorgaben verrichtet werden können.

Zusätzlich oder alternativ kann für das Teilgebiet der Verbrauch an Ressourcen analysiert werden. So kann beispielsweise in dem Teilgebiete *Living Room* R30 (vgl. Fig. 4) festgestellt werden, dass der Roboter im Bereich des Tisches mit Stühlen (vgl. Fig. 1) sehr viel Zeit benötigt, da er den Stuhl- und Tischbeinen ausweichen muss. Entsprechend kann dieser Bereich als neues Teilgebiet von dem restlichen Teilgebiet *Living Room* R30 abgetrennt werden. So kann der Bereich *Living Room* R30 in einen ersten Teilbereich *Living Room* R31 und einen zweiten Teilbereich *Living Room* R32 aufgeteilt werden.

Um festzustellen wo der Roboter viel Zeit benötigt, kann beispielsweise ein Raster mit (z.B. quadratischen) Zellen vorgegebener Größe (z.B. Roboterdurchmesser, 30 cm) über das Teilgebiet gelegt werden. Nun kann für jede Zelle die Dauer des Aufenthalts des Mittelpunkts des Roboters während einer (insbesondere der letzten) Reinigung festgestellt werden. Analog kann auch der Verbrauch anderer Ressourcen insbesondere der Energie abhängig vom Ort ermittelt werden. Es sei angemerkt, dass insbesondere der Energieverbrauch bei der Reinigung vom Bodenbelag abhängig sein kann.

Bei der Erstellung einer neuen Aufteilung kann auch festgestellt werden, dass das bestehende Teilgebiet, welches nicht entsprechend den Vorgaben bearbeitet werden kann, verkleinert werden kann. Hierbei kann beispielsweise ein Teil des Teilgebiets zu einem angrenzenden Teilgebiet hinzugefügt werden.

Der Nutzer kann jederzeit die Aufteilung des Einsatzgebietes des Roboters in die verschiedenen Teilgebiete ändern. Er kann hierzu beispielsweise die Raumaufteilung, wie sie beispielhaft in Figur 4 dargestellt ist, anpassen. Beispielsweise kann er eines der dargestellten Teilgebiete in zwei oder mehr kleinere Teilgebiete aufteilen, zwei oder mehr kleinere Teilgebiete zu einem großen Teilgebiet zusammenfassen oder die Teilgebietsgrenzen verschieben. Alternativ oder zusätzlich kann er benutzerdefinierte Teilgebiete anlegen, bearbeiten und löschen. Benutzerdefinierte Teilgebiete können beispielsweise Bereiche definieren, die der Roboter nicht befahren darf (Sperrbereich), oder die der Nutzer regelmäßig oder gelegentlich reinigen lassen will.

Durch die Änderung eines Teilgebiets kann sich auch die hiermit verbundene Ausführung von Aufgaben ändern. Insbesondere können sich die auf Teilgebieten basierenden Teilaufgaben und die hiermit verbundene Kalenderplanung ändern. Entsprechend kann die Kalenderplanung insbesondere der betroffenen (Teil-)Aufgaben angepasst werden. Die angepasste Planung kann automatisch gespeichert werden oder dem Benutzer zur Bestätigung oder Korrektur vor dem Speichern angezeigt werden.

Beispielsweise kann die Form und Größe eines Teilgebiets durch verschieben der Teilgebietsgrenzen geändert werden. Hierdurch ändert sich der Verbrauch an Ressourcen (z. B. Zeit, Energie) für eine in dem Teilgebiet zu verrichtende (Teil-)Aufgabe. Entsprechend muss der neue Verbrauch an Ressourcen bestimmt werden, um eine in einem Kalender gespeicherte Arbeitsplanung mit dem neuen Verbrauch an Ressourcen aktualisieren zu können. Häufig sind von einer Verschiebung einer Teilgebietsgrenze zwei oder mehr benachbarte Teilgebiete betroffen. Hierdurch kann der Gesamtverbrauch an Ressourcen relativ konstant bleiben, so dass die Änderungen in der Arbeitsplanung auf eine Aktualisierung der Arbeitsdauer und den hiermit verbundenen Startzeiten beschränkt bleiben kann.

Beispielsweise kann das Löschen eines (benutzerdefinierten) Teilgebiets dazu führen, dass eine in diesem Teilgebiet zu verrichtende geplante (Teil-)Aufgabe aus dem Kalenderplan gelöscht wird. Dies kann wiederum dazu führen, dass für nachfolgende Aufgaben mehr Ressourcen, z.B. Akkukapazität, zur Verfügung stehen oder zu einem früheren Zeitpunkt gestartet werden können. Entsprechend werden die Startzeiten und geplante Ladezeiten der nachfolgenden geplanten Aufgaben aktualisiert.

Ein großes Teilgebiet kann beispielsweise in zwei oder mehr kleinere Teilgebiete zerlegt werden. Eine auf dem großen Teilgebiet basierende Aufgabe kann entsprechend dem zuvor beschriebenen Vorgehen (siehe oben) in Teilaufgaben zerlegt werden, die auf den neu angelegten kleineren Teilgebieten basiert. Die Teilaufgaben könne beispielsweise in dem Zeitraum eingeplant werden, der zuvor von der Aufgabe in dem großen aufzuteilenden Gebiet beansprucht wurde. Es kann auch eine neue Planung unter Berücksichtigung der vorhergehend und nachfolgend geplanten Teilaufgaben erstellt werden. Hierbei kann beispielsweise der Verbrauch an Ressourcen optimiert werden, und somit ein früherer Abschluss aller Teilaufgaben erreicht werden.

Zwei oder mehr kleinere Teilgebiete könne zu einem größeren Teilgebiet zusammengefügt werden. Hierbei kann als Voraussetzung geprüft werden, ob die kleineren Teilgebiete zusammen liegen und eine direkte durch den Roboter befahrbare Verbindung besitzen. Die geplanten (Teil-)Aufgaben, die auf den kleineren Teilgebieten basieren, können so geplant sein, dass sie nacheinander abgearbeitet werden. In diesem Fall können sie direkt durch die Aufgabe für das neue große Teilgebiet ersetzt werden.

Beispielsweise können die geplanten (Teil-)Aufgaben, die auf den kleineren Teilgebieten basieren, zu verschiedenen Zeiten geplant sein. In diesem Fall kann die gesamte Planung basierend auf dem neuen größeren Teilgebiet neu bestimmt werden. In einer sehr einfachen beispielhaften Lösung werden die geplanten (Teil-)Aufgaben, die auf den kleineren Teilgebieten basieren, gelöscht und die hierbei frei werdenden Zeiten zum Auffüllen der Ressourcen insbesondere zum Laden des Akkus genutzt. Die neue Aufgabe basierend auf dem neuen großen Teilgebiet kann beispielsweise für das nächste freie und ausreichend große Zeitintervall eingeplant werden. Hierbei können vorgegebene Aktivitätsmodi für den Roboter beachtet werden.

Ein weiterer Eingriff des Nutzers über die Aufteilung des Einsatzgebiets in die Arbeitsplanung ist beispielsweise das Anlegen und Löschen von Sperrbereichen, die der Roboter nicht selbstständig befahren soll. Beispielsweise kann ein Teilgebiet wie ein Raum vollständig als Sperrbereich markiert werden. Wenn zu diesem Teilgebiet eine geplante (Teil-)Aufgabe existiert, kann diese beispielsweise gelöscht werden. Nachfolgend geplante Aufgaben können beispielsweise in die frei gewordene Zeit vorverlegt werden. Alternativ kann die geplante (Teil-)Aufgabe beibehalten aber nicht ausgeführt werden, bis der Nutzer den Sperrbereich wieder aufhebt. Die freie Zeit kann der Roboter beispielsweise zum Auffüllen der Ressourcen (Akku laden) oder zu einer Schnellreinigung anderer Bereiche nutzen.

Zusätzlich oder alternativ kann der Nutzer benutzerdefinierte Teilgebiete anlegen und als Sperrbereich definieren, die der Roboter nicht selbstständig befahren soll. Derartige Sperrbereiche können mit einem oder mehr Teilgebieten, für die (Teil-)Aufgaben geplant sind, überlappen. Wenn diese Sperrbereiche hinreichend groß sind, können sie einen Einfluss auf die Verrichtung einer (Teil-)Aufgabe in dem Teilgebiet haben. Insbesondere kann ein neu angelegter Sperrbereich die benötigten Ressourcen zur Verrichtung der Aufgabe wie Zeit und Energie reduzieren. Andererseits kann ein gelöschter Sperrbereich die benötigten Ressourcen zur Verrichtung der Aufgabe wie Zeit und Energie erhöhen. Deshalb kann beispielsweise geprüft werden, ob ein benutzerdefinierter Sperrbereich mit einem oder mehreren Teilgebieten überlappt. Beispielsweise kann zusätzlich geprüft werden, ob die Überlappung eine vorgebbare Größe (z. B. 1 qm) überschreitet. Wenn dies der Fall ist, so kann beim Anlegen und/oder beim Löschen eines Sperrbereichs der Verbrauch an Ressourcen für die Verrichtung einer (Teil-)Aufgabe in dem Teilgebiet neu ermittelt werden und die geplanten Aufgaben entsprechend angepasst werden.

Die hier beschriebenen Verfahren können in Form von Software implementiert sein. Die Software kann auf einem Roboter, auf einem HMI und/oder auf einem beliebigen anderen Computer wie insbesondere einem Home-Server oder einem Cloud-Server ausgeführt werden. Insbesondere können einzelne Teile des Verfahrens in verschieden Softwaremodule unterteilt sein, die auf verschiedenen Geräten ausgeführt werden.

Die hier beschriebenen Ausführungsbeispiele werden im Folgenden zusammengefasst. Bei der folgenden Liste mit 73 Elementen handelt es sich nicht um eine vollständige Aufzählung wesentlicher technischer Merkmale, sondern um eine lediglich exemplarische Zusammenfassung:
Beispiel 1. Verfahren zur Steuerung wenigstens eines autonomen mobilen Roboters (100), wobei der wenigstens eine Roboter (100) dazu ausgebildet ist, anhand einer Karte eines Einsatzgebietes in diesem Einsatzgebiet zu navigieren und in dem Einsatzgebiet autonom wenigstens eine Aufgabe zu verrichten; das Verfahren weist auf:
   Empfangen eines Arbeitsauftrags, wobei der Arbeitsauftrag Anweisungen zum Durchführen wenigstens einer Aufgabe in dem Einsatzgebiet enthält;
   automatisches Aufteilen des Arbeitsauftrages in wenigstens zwei Teilaufgaben;
   automatisches Festlegen einer Reihenfolge, in welcher die Teilaufgaben von dem wenigstens einen Roboter (100) abgearbeitet werden, wobei
   nach Abarbeitung aller Teilaufgaben der Arbeitsauftrag vollständig erledigt ist.
Beispiel 2. Verfahren gemäß Beispiel 1, wobei das Aufteilen des Arbeitsauftrages in wenigstens zwei Teilaufgaben basierend auf wenigstens einem der Folgenden erfolgt:
   einer Struktur der Umgebung;
   der Anzahl der zur Verfügung stehenden Roboter (100);
   der Anzahl der zu erledigenden Aufgaben;
   der Art der zu erledigenden Aufgaben.
Beispiel 3. Verfahren gemäß Beispiel 1 oder 2, wobei
   das Aufteilen des Arbeitsauftrages in wenigstens zwei Teilaufgaben das Aufteilen der wenigstens einen Aufgabe in wenigstens zwei Aufgaben aufweist; und
   jede Teilaufgabe das Durchführen einer der wenigstens zwei Aufgaben in dem gesamten Einsatzgebiet oder in einem Teil des Einsatzgebietes aufweist.
Beispiel 4. Verfahren gemäß Beispiel 1, 2 oder 3, wobei
   das Einsatzgebiet in wenigstens zwei Teilgebiete (R10, R20, R30) aufgeteilt ist; und
   das Aufteilen des Arbeitsauftrages in wenigstens zwei Teilaufgaben derart erfolgt, dass jede Teilaufgabe das Durchführen wenigstens einer Aufgabe in einem der Teilgebiete (R10, R20, R30) aufweist.
Beispiel 5. Verfahren gemäß Beispiel 4, wobei das Einsatzgebiet eine Wohnung oder ein Haus ist und jedes der Teilgebiete einen Raum oder zumindest einen Bereich eines Raumes in der Wohnung oder dem Haus aufweist.
Beispiel 6. Verfahren gemäß einem der Beispiele 1 bis 5, wobei zum Durchführen des Arbeitsauftrags wenigstens eine Ressource benötigt wird und das Verfahren weiterhin wenigstens einen der folgenden Schritte aufweist:
   Bestimmen eines zu erwartenden Ressourcenverbrauchs, welcher zur Durchführung jeder der Teilaufgaben benötigt wird;
   Bestimmen der vor dem Durchführen einer Teilaufgabe zur Verfügung stehenden Ressourcen;
   Bestimmen der nach dem Durchführen einer Teilaufgabe zur Verfügung stehenden Ressourcen; und
   Auffüllen einer oder mehrerer Ressourcen, wenn die vor einer Teilaufgabe zur Verfügung stehenden Ressourcen nicht zum Durchführen der Teilaufgabe ausreichend sind.
Beispiel 7. Verfahren gemäß Beispiel 6, wobei die wenigstens eine Ressource wenigstens eines der Folgenden aufweist:
   Energie;
   Zeit; und
   Reinigungsmittel.
Beispiel 8. Verfahren gemäß Beispiel 6 oder 7, wobei das Bestimmen eines zu erwartenden Ressourcenverbrauchs, welcher zur Durchführung jeder der Teilaufgaben benötigt wird, unter Berücksichtigung eines für vorhergehende identische oder ähnliche Teilaufgaben unter identischen oder ähnlichen Bedingungen ermittelten Verbrauchs erfolgt.
Beispiel 9. Verfahren gemäß einem der Beispiele 6 bis 8, das weiterhin aufweist:
   Vergleichen des vorab bestimmten zu erwartenden Ressourcenverbrauchs, welcher zur Durchführung jeder der Teilaufgaben benötigt wird, mit einem tatsächlichen Ressourcenverbrauchs, welcher zur Durchführung jeder der Teilaufgaben tatsächlich benötigt wurde.
Beispiel 10. Verfahren gemäß einem der Beispiele 1 bis 9, das weiter aufweist:
   Empfangen von Informationen über einen gewünschten Startzeitpunkt, zu welchem mit der Abarbeitung des Arbeitsauftrages begonnen werden soll;
   Eintragen der Teilaufgaben in der festgelegten Reihenfolge in einen Kalender, wobei der im Kalender dargestellte Startzeitpunkt der ersten Teilaufgabe dem gewünschten Startzeitpunkt des Arbeitsauftrages entspricht; und
   automatisches Starten des Arbeitsauftrages zu der im Kalender eingetragenen gewünschten Zeit.
Beispiel 11. Verfahren gemäß einem der Beispiele 1 bis 10, wobei zum Durchführen des Arbeitsauftrags wenigstens eine Ressource benötigt wird, und wobei das Festlegen der Reihenfolge, in welcher die Teilaufgaben abgearbeitet werden sollen weiterhin aufweist:
   Bestimmen wenigstens eines Zeitpunktes zwischen wenigstens zwei Teilaufgaben, zu welchem wenigstens eine Ressource zumindest teilweise aufgefüllt wird.
Beispiel 12. Verfahren gemäß einem der Beispiele 1 bis 11, wobei die automatische festgelegte Reihenfolge der Teilaufgaben durch einen Nutzer geändert oder angepasst werden kann, wobei die Änderung oder Anpassung das Ändern oder Anpassen der vorgesehenen Startzeit wenigstens einer Teilaufgabe aufweist.
Beispiel 13. Verfahren gemäß einem der Beispiele 1 bis 12,
   wobei das Festlegen der Reihenfolge, in welcher die Teilaufgaben abgearbeitet werden sollen, in Abhängigkeit von wenigstens einer Vorgabe erfolgt,
   wobei die automatische festgelegte Reihenfolge der Teilaufgaben durch einen Nutzer geändert oder angepasst werden kann, und
   wobei die Änderung oder Anpassung das Ändern oder Anpassen der wenigstens einen Vorgabe aufweist.
Beispiel 14. Verfahren gemäß Beispiel 13, wobei die wenigstens eine Vorgabe wenigstens eines der folgenden aufweist:
   verschiedene Aktivitätsmodi, wobei ein Aktivitätsmodus vorgibt, ob der wenigstens eine Roboter autonom Aufgaben erledigen soll und/oder dem Nutzer zum Durchführen nicht vorab geplanter Aufgaben zur Verfügung stehen soll und/oder keine Aufgaben durchführen soll;
   eine Saugstärke; und
   eine Intensität der Reinigung des Einsatzgebietes.
Beispiel 15. Verfahren gemäß einem der Beispiele 1 bis 14, wobei wenigstens zwei Roboter (100) zur Verfügung stehen und jeder der zwei Roboter (100) wenigstens eine der Teilaufgaben abarbeitet.
Beispiel 16. Verfahren nach einem der Beispiele 1 bis 15, wobei das Verfahren weiterhin das Ermitteln einer zu erwartenden Zeit, welche voraussichtlich für die Abarbeitung einer Teilaufgabe benötigt wird, aufweist, und wobei wenigstens eines von:
   beim Ermitteln der zu erwartenden Zeit ein Risikoaufschlag berücksichtigt wird, welcher zu der ermittelten zu erwartenden Zeit hinzuaddiert wird; und
   basierend auf der ermittelten zu erwartenden Zeit ein zu erwartender Startzeitpunkt einer nachfolgenden Teilaufgabe ermittelt wird.
Beispiel 17. Verfahren nach Beispiel 16, wobei
   der zu erwartende Startzeitpunkt einer nachfolgenden Teilaufgabe während der Abarbeitung der vorhergehenden Teilaufgabe entsprechend einer tatsächlich für die vorhergehende Teilaufgabe benötigten Zeit angepasst wird, so dass der Startzeitpunkt der nachfolgenden Teilaufgabe dem Endzeitpunkt der vorhergehenden Teilaufgabe entspricht; oder
   eine nachfolgende Teilaufgabe zu dem vorab ermittelten voraussichtlichen Zeitpunkt begonnen wird, wobei ein Zeitraum zwischen dem tatsächlichen Endzeitpunkt der vorhergehenden Teilaufgabe und dem Startzeitpunkt der nachfolgenden Teilaufgabe zur Durchführung wenigstens einer Sonderaufgabe genutzt wird, wenn der Zeitraum zwischen dem tatsächlichen Endzeitpunkt der vorhergehenden Teilaufgabe und dem Startzeitpunkt der nachfolgenden Teilaufgabe einen vorgegebenen Schwellwert überschreitet.
Beispiel 18. Verfahren gemäß Beispiel 17, wobei die wenigstens eine Sonderaufgabe wenigstens eines der folgenden aufweist:
   Auffüllen wenigstens einer Ressource;
   Ausleeren eines Schmutzbehälters;
   Reinigung einer oder mehrerer Ecken in dem Einsatzgebiet;
   Erneute oder zusätzliche Reinigung besonders verschmutzter Bereiche im Einsatzgebiet; und
   Durchführen einer Kontrollaufgabe.
Beispiel 19. Verfahren gemäß einem der Beispiele 1 bis 18, das weiterhin aufweist
   Bestimmen, ob eine erfolgreiche Abarbeitung einer Teilaufgabe zu erwarten ist; und
   Aussenden einer Nachricht an den Nutzer, wenn bestimmt wird, dass wenigstens eine Teilaufgabe nicht erfolgreich bearbeitet werden wird.
Beispiel 20. Verfahren gemäß Beispiel 19, wobei das Bestimmen ob eine erfolgreiche Abarbeitung einer Teilaufgabe zu erwarten ist wenigstens eines der folgenden aufweist:
   Bestimmen, ob eine Ressource während der Abarbeitung einer Teilaufgabe aufgefüllt werden muss;
   Bestimmen, ob ein Schmutzbehälter entleert werden muss;
   Bestimmen, ob der Zugang zu einem Teilgebiet freigegeben werden muss;
   Bestimmen, ob der Roboter (100) manuell in einen anderen Teilbereich befördert werden muss.
Beispiel 21. Verfahren gemäß einem der Beispiele 1 bis 20, wobei das automatische Festlegen einer Reihenfolge, in welcher die Teilaufgaben von dem wenigstens einen Roboter (100) abgearbeitet werden, unter Berücksichtigung von in einem Kalender hinterlegten Planungsvorgaben erfolgt.
Beispiel 22. Verfahren gemäß Beispiel 21, wobei die Planungsvorgaben Informationen über eine gewünschte Aktivität des wenigstens einen Roboters (100) zu bestimmten Zeitpunkten aufweisen.
Beispiel 23. Verfahren gemäß Beispiel 22, wobei die Planungsvorgaben wenigstens einen Aktivitätsmodus aufweisen, und wobei der wenigstens eine Aktivitätsmodus wenigstens eines der folgenden aufweist:
   einen Arbeitsmodus, wobei der Roboter (100) dazu ausgebildet ist, während er in dem Arbeitsmodus ist, autonom die in dem entsprechenden Zeitraum vorliegenden Arbeitsaufträge zu planen und abzuarbeiten;
   einen Bereitschaftsmodus, wobei der Roboter (100) dazu ausgebildet ist, während er in dem Bereitschaftsmodus ist, keine Arbeitsaufträge automatisch zu planen und abzuarbeiten und nur auf Anweisung des Nutzers anfallende Arbeitsaufträge zu planen und abzuarbeiten; und
   einen Schlafmodus, wobei der Roboter (100) dazu ausgebildet ist, während er in dem Schlafmodus ist, keine Arbeitsaufträge zu planen und abzuarbeiten.
Beispiel 24. Verfahren gemäß Beispiel 23, wobei der Roboter (100) dazu ausgebildet ist, während er sich in dem Bereitschaftsmodus oder dem Schlafmodus befindet, bei Bedarf, Ressourcen aufzufüllen.
Beispiel 25. Verfahren zur Steuerung eines autonomen mobilen Roboters (100), wobei der Roboter (100) dazu ausgebildet ist, wenigstens eine Aufgabe in einem Einsatzgebiet zu einer jeweils vorgegebenen Zeit autonom abzuarbeiten, wobei das Verfahren aufweist:
   Eintragen wenigstens einer Aufgabe in einen Kalender zu der jeweils vorgegebenen Zeit;
   Empfangen eines Arbeitsauftrags zur sofortigen Durchführung, wobei der Arbeitsauftrag Anweisungen zum sofortigen Durchführen wenigstens einer Aufgabe in dem Einsatzgebiet enthält;
   Prüfen, ob der Arbeitsauftrag zur sofortigen Durchführung mit einer oder mehreren in dem Kalender eingetragenen Aufgaben zeitlich kollidiert; und
   wenn eine Kollision festgestellt wird, Unterbrechen oder Unterlassen der wenigstens einen von der Kollision betroffenen Aufgabe und Treffen einer Entscheidung, ob und wann die wenigstens eine von einer Kollision betroffene in den Kalender eingetragene Aufgabe weitergeführt oder wiederholt werden soll.
Beispiel 26. Verfahren gemäß Beispiel 25, das weiterhin aufweist
   Prüfen ob die wenigstens eine von einer Kollision betroffene Aufgabe zumindest teilweise in dem Arbeitsauftrag zur sofortigen Durchführung enthalten ist.
Beispiel 27. Verfahren gemäß Beispiel 25 oder 26, das weiterhin aufweist
   Aufteilen des Arbeitsauftrages zur sofortigen Durchführung in wenigstens zwei Teilaufgaben zur sofortigen Durchführung; und
   Prüfen ob eine oder mehrere der von einer Kollision betroffenen in den Kalender eingetragenen Aufgaben einer oder mehrerer Teilaufgaben zur sofortigen Durchführung zumindest teilweise entsprechen.
Beispiel 28. Verfahren gemäß Beispiel 26 oder 27, wobei wenn die von einer Kollision betroffenen in den Kalender eingetragenen Aufgaben einer oder mehrerer Teilaufgaben zur sofortigen Durchführung zumindest teilweise entsprechen, die entsprechenden Aufgaben oder Teilaufgaben nicht doppelt ausgeführt werden.
Beispiel 29. Verfahren gemäß einem der Beispiele 26 bis 28, wobei wenn die von einer Kollision betroffenen in den Kalender eingetragenen Aufgaben nicht einer oder mehreren Teilaufgaben zur sofortigen Durchführung zumindest teilweise entsprechen, das Verfahren weiterhin aufweist
   Prüfen, ob die betroffenen in den Kalender eingetragenen Aufgaben zu einem späteren Zeitpunkt wiederholt werden können.
Beispiel 30. Verfahren gemäß Beispiel 29, wobei das Prüfen, ob die betroffenen in den Kalender eingetragenen Aufgaben zu einem späteren Zeitpunkt wiederholt werden können, unter Berücksichtigung von im Kalender hinterlegten allgemeinen Planungsvorgaben erfolgt.
Beispiel 31. Verfahren gemäß Beispiel 30, wobei die im Kalender hinterlegten allgemeinen Planungsvorgaben Ruhezeiten des Roboters (100) aufweisen.
Beispiel 32. Verfahren gemäß einem der Beispiele 29 bis 31, wobei das Verfahren weiterhin aufweist:
   Durchführen der von einer Kollision betroffenen in den Kalender eingetragenen Aufgaben im Anschluss an die Durchführung des Arbeitsauftrags zur sofortigen Durchführung.
Beispiel 33. Verfahren gemäß einem der Beispiele 29 bis 31, wobei das Verfahren weiterhin aufweist:
   Prüfen, ob die von einer Kollision betroffene in den Kalender eingetragene Aufgabe an einem darauffolgenden Tag durchgeführt werden soll;
   Prüfen, ob für den darauffolgenden Tag eine ähnliche oder identische Aufgabe in den Kalender eingetragen ist; und
   Durchführen der von einer Kollision betroffenen in den Kalender eingetragenen Aufgaben an einem darauffolgenden Tag, wenn an dem darauffolgenden Tag keine ähnliche oder identische Aufgabe in den Kalender eingetragen ist.
Beispiel 34. Verfahren zur Steuerung wenigstens eines autonomen mobilen Roboters (100), wobei der wenigstens eine Roboter (100) dazu ausgebildet ist, eine Aufgabe zu einem vorgegebenen Zeitpunkt in einem Einsatzgebiet durchzuführen, wobei das Verfahren aufweist:
   Festlegen von allgemeinen Planungsvorgaben, wobei die allgemeinen Planungsvorgaben eine Aktivität des wenigstens einen Roboters (100) betreffen; und
   automatisches Planen von Zeitpunkten, zu welchen eine Aufgabe durchgeführt werden soll, wobei die Planung unter Berücksichtigung der allgemeinen Planungsvorgaben erfolgt, wobei
   die allgemeinen Planungsvorgaben vorsehen, dass zu bestimmten vorgebbaren Zeitpunkten oder Zeiträumen keine Aufgaben automatisch geplant und durchgeführt werden.
Beispiel 35. Verfahren gemäß Beispiel 34, wobei die allgemeinen Planungsvorgaben wenigstens einen Aktivitätsmodus aufweisen und wobei der wenigstens eine Aktivitätsmodus wenigstens eines der folgenden aufweist:
   einen Arbeitsmodus, wobei wenigstens einer der Roboter (100) dazu ausgebildet ist, während er in dem Arbeitsmodus ist, autonom die in dem entsprechenden Zeitraum vorliegenden Arbeitsaufträge zu planen und abzuarbeiten;
   einen Bereitschaftsmodus, wobei wenigstens einer der Roboter (100) dazu ausgebildet ist, während er in dem Bereitschaftsmodus ist, keine Arbeitsaufträge automatisch zu planen und abzuarbeiten und nur auf Anweisung des Nutzers anfallende Arbeitsaufträge zu planen und abzuarbeiten; und
   einen Schlafmodus, wobei wenigstens einer der Roboter (100) dazu ausgebildet ist, während er in dem Schlafmodus ist, keine Arbeitsaufträge zu planen und abzuarbeiten.
Beispiel 36. Verfahren gemäß Beispiel 35, wobei der wenigstens eine Roboter (100) dazu ausgebildet ist, wenigstens eines von
   zu bestimmten vorgebbaren Zeitpunkten aus einem Aktivitätsmodus in einen anderen Aktivitätsmodus zu wechseln; und
   als Reaktion auf ein bestimmtes vorgebbares Ereignis hin aus einem Aktivitätsmodus in einen anderen Aktivitätsmodus zu wechseln.
Beispiel 37. Verfahren gemäß Beispiel 36, wobei das vorgebbare Ereignis wenigstens eines aufweist von:
   Entfernen des Nutzers vom Einsatzgebiet;
   Zurückkehren des Nutzers zum Einsatzgebiet;
   Einschlafen des Nutzers; und
   Aufwachen des Nutzers.
Beispiel 38. Verfahren gemäß Beispiel 36 oder 37, wobei eine Aufgabe eines Roboters abgebrochen oder unterbrochen wird, wenn der entsprechende Roboter während der Durchführung der Aufgabe auf ein Ereignis hin aus dem Arbeitsmodus in den Bereitschaftsmodus oder den Schlafmodus wechselt.
Beispiel 39. Verfahren gemäß Beispiel 38, wobei, wenn bei einem Wechsel des Roboters (100) in den Arbeitsmodus eine abgebrochene Aufgabe vorliegt, das Verfahren weiterhin aufweist:
   Prüfen ob die abgebrochene Aufgabe sofort oder zu einem späteren Zeitpunkt wiederholt oder fortgeführt werden soll.
Beispiel 40. Verfahren gemäß Beispiel 39, wobei das Prüfen ob die abgebrochene Aufgabe sofort oder zu einem späteren Zeitpunkt wiederholt oder fortgeführt werden soll aufweist:
   Prüfen, ob während eines bestimmten vorgebbaren Zeitraumes, welcher auf den Wechsel in den Arbeitsmodus folgt, eine Aufgabe geplant ist, welche der abgebrochenen Aufgabe zumindest teilweise entspricht; und
   Löschen und Unterlassen der abgebrochenen Aufgabe, wenn während des bestimmten vorgebbaren Zeitraumes, welcher auf den Wechsel in den Arbeitsmodus folgt, eine Aufgabe geplant ist, welche der abgebrochenen Aufgabe zumindest teilweise entspricht.
Beispiel 41. Verfahren gemäß einem der Beispiele 34 bis 40, wobei der Roboter (100) während der Durchführung einer Aufgabe wenigstens eine Ressource verbraucht und wobei das Verfahren weiterhin aufweist:
   automatisches Planen von Zeitpunkten, zu welchen wenigstens eine Ressource aufgefüllt werden soll, wobei die Planung unter Berücksichtigung der allgemeinen Planungsvorgaben erfolgt.
Beispiel 42. Verfahren gemäß Beispiel 41, wobei
   das Auffüllen der wenigstens einen Ressource das Aufladen eines Akkus des wenigstens einen Roboters (100) aufweist,
   die Geschwindigkeit der Aufladung des Akkus von einem gewählten Ladeprogramm abhängt, und
   das Wählen des Ladeprogramms in Abhängigkeit der allgemeinen Planungsvorgaben erfolgt.
Beispiel 43. Verfahren gemäß einem der Beispiele 34 bis 42, wobei unterschiedliche Roboter (100) dazu ausgebildet sind, die allgemeinen Planungsvorgaben abhängig von der jeweils durchzuführenden Aufgabe unterschiedlich zu interpretieren.
Beispiel 44. Verfahren zur Steuerung wenigstens eines autonomen mobilen Roboters (100), wobei der Roboter (100) dazu ausgebildet ist, eine Aufgabe in einem Einsatzgebiet zu einem vorgebbaren Zeitpunkt autonom durchzuführen, wobei das Verfahren aufweist:
   Abspeichern von einem oder mehreren Zeitpunkten in einem Kalender, zu welchen eine Nachricht an einen Nutzer gesendet werden soll;
   zu den jeweils abgespeicherten Zeitpunkten, Prüfen, ob eine oder mehrere vorgebbare Bedingungen erfüllt sind; und
   wenn wenigstens eine der Bedingungen erfüllt ist, Absenden der entsprechenden Nachricht.
Beispiel 45. Verfahren gemäß Beispiel 44, wobei die wenigstens eine Bedingung wenigstens eines aufweist von:
   ein Akkustand des Roboters (100);
   ein Füllstand eines Schmutzbehälters des Roboters (100) oder einer Basisstation (110) des Roboters (100);
   ein Füllstand einer Reinigungsflüssigkeit im Roboter (100) oder einer Basisstation (110) des Roboters (100);
   eine Erfüllbarkeit nachfolgend geplanter Aufgaben.
Beispiel 46. Verfahren gemäß Beispiel 44 oder 45, wobei das Prüfen, ob eine oder mehrere vorgebbare Bedingungen erfüllt sind aufweist:
   Bewegen des Roboters (100) in dem Einsatzgebiet; und
   Sammeln von Informationen über das Einsatzgebiet.
Beispiel 47. Verfahren gemäß Beispiel 46, wobei das Sammeln von Informationen über das Einsatzgebiet wenigstens eines der folgenden aufweist:
   Prüfen, ob ein Teilgebiet des Einsatzgebietes für den Roboter (100) erreichbar ist;
   Prüfen, ob sich der Nutzer in dem Einsatzgebiet aufhält;
   Prüfen, in welchem Teilgebiet des Einsatzgebietes sich der Roboter (100) befindet.
Beispiel 48. Verfahren gemäß einem der Beispiele 44 bis 47, wobei der Roboter (100) dazu ausgebildet ist, sich an einen vorgegeben Ort innerhalb des Einsatzgebietes zu bewegen bevor, während oder nachdem er eine Nachricht an den Nutzer aussendet.
Beispiel 49. Verfahren gemäß einem der Beispiele 44 bis 47, wobei das Verfahren weiterhin aufweist:
   Prüfen, ob für die erfolgreiche Durchführung einer zukünftig geplanten Aufgabe das Eingreifen eines Nutzers erforderlich ist; und
   wenn festgestellt wird, dass ein Eingreifen des Nutzers erforderlich ist, Aussenden eines Vorschlages an den Nutzer, wobei der Vorschlag eine Information zu einem Zeitpunkt enthält, zu welchem der Roboter (100) plant eine Erinnerung für das Eingreifen zu senden.
Beispiel 50. Verfahren gemäß einem der Beispiele 44 bis 49, wobei das Verfahren weiterhin aufweist:
   Feststellen, ob eine Nachricht erfolgreich an den Nutzer zugestellt wurde.
Beispiel 51. Verfahren gemäß Beispiel 50, wobei die Nachricht eine Information über einen erforderlichen Eingriff des Nutzers aufweist und eine Zustellung als erfolgreich angesehen wird, wenn der Nutzer nach dem Empfang der Nachricht den erforderlichen Eingriff durchgeführt hat.
Beispiel 52. Verfahren gemäß einem der Beispiele 50 bis 51, wobei, wenn festgestellt wurde, dass eine Nachricht einmal oder mehrmals nicht erfolgreich zugestellt wurde, die Nachricht zu einem anderen Zeitpunkt noch einmal gesendet wird oder dem Nutzer angeboten wird die Nachricht zu einem anderen Zeitpunkt zu senden.
Beispiel 53. Verfahren zum Programmieren eines autonomen mobilen Roboters (100), das Verfahren weist auf:
   Anzeigen eines zeitlichen Verlaufs von vom Roboter (100) auszuführenden Aufgaben auf einer Mensch-Maschine-Schnittstelle (200), wobei der zeitliche Verlauf eine aktuelle Aufgabe des Roboters (100), zukünftig geplante Aufgaben des Roboters (100) und vergangene Aufgaben des Roboters (100) aufweist, wobei die Aufgaben in Teilaufgaben unterteilt sein können; und
   Empfangen eines Nutzerkommandos, wobei das Nutzerkommando die Änderung wenigstens einer der zukünftig geplanten Aufgaben oder Teilaufgaben, oder das Hinzufügen neuer Aufgaben oder Teilaufgaben zur Folge hat.
Beispiel 54. Verfahren gemäß Beispiel 53, wobei der zeitliche Verlauf weiterhin wenigstens eine zusätzliche Information über wenigstens eine der Aufgaben aufweist, wobei die wenigstens eine Information wenigstens eines aufweist von einer zeitlichen Dauer der Aufgabe, störender Ereignisse während der Aufgabe und den Erfolg einer Aufgabe.
Beispiel 55. Verfahren gemäß Beispiel 52 oder 53, wobei das Empfangen eines Nutzerkommandos als Reaktion auf ein auslösendes Ereignis hin erfolgt, wobei das Auslösende Ereignis wenigstens eines aufweist von dem Berühren eines Touch-Displays der Mensch-Maschine-Schnittstelle (200), dem Anklicken einer Schaltfläche (403) der Mensch-Maschine-Schnittstelle (200) und einem Sprachkommando.
Beispiel 56. Verfahren gemäß einem der Beispiele 53 bis 55, wobei das Anzeigen eines zeitlichen Verlaufs der vom Roboter (100) auszuführenden Aufgaben auf einer Mensch-Maschine-Schnittstelle (200) das Anzeigen der Aufgaben auf einem Display aufweist, und wobei durch Anwählen einer Aufgabe auf dem Display wenigstens ein Parameter im Zusammenhang mit der Aufgabe geändert werden kann.
Beispiel 57. Verfahren gemäß Beispiel 56, wobei der wenigstens eine Parameter wenigstens eines aufweist von:
   ein Reinigungsmuster des Roboters (100);
   eine Saugstärke des Roboters (100);
   eine Geschwindigkeit des Roboters (100);
   eine Lautstärke im Zusammenhang mit dem Roboter (100);
   einer Patrouillenhäufigkeit des Roboters (100);
   einer Angabe darüber, ob eine Aufgabe einmalig oder regelmäßig durchgeführt werden soll.
Beispiel 58. Verfahren gemäß einem der Beispiele 53 bis 57, wobei das Verfahren weiterhin aufweist:
   Empfangen eines weiteren Nutzerkommandos, wobei das weitere Nutzerkommando das Anzeigen wenigstens einer Statistik zur Folge hat.
Beispiel 59. Verfahren gemäß Beispiel 58, wobei die wenigstens eine Statistik aufweist:
   eine Statistik über eine zu erwartende Bearbeitungszeit für eine oder mehrere Aufgaben oder Teilaufgaben;
   eine Statistik über die Bearbeitungsfläche für eine oder mehrere Aufgaben oder Teilaufgaben;
   eine Statistik über eine zu erwartende Verschmutzung;
   eine Statistik über tatsächliche Ergebnisse einer angewählten Aufgabe oder mehrerer vergangener Aufgaben.
Beispiel 60. Verfahren zur Steuerung wenigstens eines autonomen mobilen Roboters (100), wobei der wenigstens eine Roboter (100) dazu ausgebildet ist, anhand einer Karte eines Einsatzgebietes in diesem Einsatzgebiet zu navigieren und in dem Einsatzgebiet gemäß den Einträgen in einem Kalender autonom wenigstens eine Aufgabe zu verrichten, wobei der Roboter (100) einen Akku aufweist und weiterhin dazu ausgebildet ist den Akku an einer Basisstation (110) aufzuladen, wobei zum Aufladen des Akkus eines von wenigstens zwei Akku-Ladeprogrammen gewählt werden kann, wobei die Ladegeschwindigkeit von dem gewählten Akku-Ladeprogramm abhängt, das Verfahren weist auf:
   Wählen eines Akku-Ladeprogrammen in Abhängigkeit von den Einträgen in dem Kalender.
Beispiel 61. Verfahren gemäß Beispiel 60, wobei das Verfahren weiterhin aufweist:
   Wählen zwischen wenigstens zwei der folgenden Akku-Ladeprogrammen, wobei
   ein erstes Akku-Ladeprogramm ein Schnelladeprogramm ist, bei welchem der Akku mit einer hohen Stromstärke geladen wird und/oder der Akku nur unvollständig geladen wird;
   ein zweites Akku-Ladeprogramm ein langsames Ladeprogramm ist, bei welchem der Akku schonend über einen längeren Zeitraum aufgeladen wird; und
   ein drittes Akku-Ladeprogramm ein Dauer-Ladeprogramm ist, bei welchem dem Akku in regelmäßigen Abständen eine Erhaltungsladung zugeführt wird.
Beispiel 62. Verfahren gemäß Beispiel 60 oder 61, wobei die Wahl des Akku-Ladeprogramms in Abhängigkeit von Bereitschaftszeiten oder Ruhezeiten des Roboters (100) erfolgt.
Beispiel 63. Verfahren gemäß einem der Beispiele 60 bis 62, wobei eine vom Roboter (100) auszuführende Aufgabe in wenigstens zwei Teilaufgaben zerlegt wird und vor Beginn jeder Teilaufgabe geprüft wird, ob genügend Energie zum vollständigen Durchführen der Teilaufgabe im Akku vorhanden ist.
Beispiel 64. Verfahren gemäß Beispiel 63, wobei der für eine Teilaufgabe benötigte Energiebedarf basierend auf zumindest einer in der Vergangenheit durchgeführten Aufgabe oder Teilaufgabe geschätzt wird.
Beispiel 65. Verfahren gemäß Beispiel 63, wobei die Teilaufgabe in einem Teilgebiet des Einsatzgebietes durchzuführen ist, und wobei der für die Teilaufgabe benötigte Energiebedarf basierend auf wenigstens einer Eigenschaft des Teilgebietes bestimmt wird.
Beispiel 66. Verfahren gemäß Beispiel 65, wobei die wenigstens eine Eigenschaft wenigstens eines aufweist von:
   einer Größe des Teilgebietes;
   einer Bodenbeschaffenheit des Teilgebietes; und
   in dem Teilgebiet vorhandene Hindernisse.
Beispiel 67. Verfahren gemäß Beispiel 63, wobei der für die Teilaufgabe benötigte Energiebedarf basierend auf Betriebsparametern zur Ausübung der Teilaufgabe bestimmt wird, wobei die Betriebsparameter wenigstens eines aufweisen von:
   einer Aktuator-Stärke des Roboters (100);
   einer Saugstärke des Roboters (100);
   einer Bewegungsgeschwindigkeit des Roboters (100);
   einer Gründlichkeit des Roboters (100).
Beispiel 68. Verfahren gemäß einem der Beispiele 60 bis 67, wobei der Kalender weiterhin Eigenschaften und Informationen zur Bereitschaft des Roboters (100) zu bestimmten Zeitpunkten gespeichert sind, und das Akku-Ladeprogramm in Abhängigkeit von diesen Informationen ausgewählt wird.
Beispiel 69. Verfahren zur Steuerung wenigstens eines autonomen mobilen Roboters (100), wobei der wenigstens eine Roboter (100) dazu ausgebildet ist, anhand einer Karte eines Einsatzgebietes in diesem Einsatzgebiet zu navigieren und in dem Einsatzgebiet autonom wenigstens eine Aufgabe zu verrichten, wobei das Einsatzgebiet wenigstens ein Teilgebiet aufweist, welches in der Karte gespeichert ist, das Verfahren weist auf:
   automatisch oder anhand einer Nutzereingabe, Erkennen, ob eine Aufgabe in dem Teilgebiet nicht gemäß einer Vorgabe durchgeführt werden kann; und
   Erstellen einer neuen Aufteilung der Teilgebiete derart, dass die Aufgabe in dem Teilgebiet gemäß der Vorgaben verrichtet werden kann.
Beispiel 70. Verfahren gemäß Beispiel 69, wobei wenigstens eines von:
   die Vorgabe eine zu verrichtende Aufgabe mit vorgegebenen Ressourcen aufweist, wobei die Ressourcen wenigstens eines von Zeit, Energie und Reinigungsmittel aufweisen;
   das Teilgebiet in wenigstens zwei Teile zerlegt wird;
   die Verteilung des Verbrauchs von Ressourcen während der Durchführung einer Teilaufgabe ermittelt wird und die Aufteilung der Teilgebiete basierend auf der Verteilung des Verbrauchs bestimmt wird; und
   wenigstens ein Teilgebiet verkleinert wird, indem ein Teil dieses Teilgebiets zu einem benachbarten Teilgebiet hinzugefügt wird.
Beispiel 71. Verfahren zur Steuerung eines autonomen mobilen Roboters (100), wobei der wenigstens eine Roboter (100) dazu ausgebildet ist, anhand einer Karte eines Einsatzgebietes in diesem Einsatzgebiet zu navigieren und in dem Einsatzgebiet entsprechend einer Kalenderplanung autonom wenigstens eine Aufgabe zu verrichten, wobei das Einsatzgebiet wenigstens ein Teilgebiet aufweist welches in der Karte gespeichert ist, das Verfahren weist auf:
   manuelles Anpassen der Teilgebiete durch einen Nutzer; und
   automatisches Anpassen der Kalenderplanung in Abhängigkeit von der vom Nutzer durchgeführten Anpassung der Teilgebiete.
Beispiel 72. Verfahren gemäß Beispiel 71, wobei wenigstens eines von
   eine zu erwartende Bearbeitungsdauer und/oder ein zu erwartender Ressourcenverbrauch für die Teilgebiete neu bestimmt wird, wenn durch den Nutzer Änderungen an der Größe eines oder mehrerer Teilgebiete vorgenommen wurden;
   eine Aufgabe in eine erste Anzahl von Teilaufgaben zerlegt wird, wenn der Nutzer ein Teilgebiet in eine erste Anzahl von Gebieten zerlegt hat;
   zwei oder mehr Teilaufgaben zu einer Aufgabe zusammengefügt werden, wenn der Nutzer zwei oder mehr Teilgebiete zusammengefügt hat;
   zwei oder mehr Teilaufgaben gelöscht werden, wenn der Nutzer zwei oder mehr zugehörige Teilgebiete gelöscht hat; und
   löschen oder unterlassen von Teilaufgaben, wenn der Nutzer zugehörige Teilgebiete zu Sperrgebieten erklärt hat, welche der Roboter (100) nicht befahren darf.
Beispiel 73. Autonomer Roboter, der mit einer internen und/oder externen Datenverarbeitungsanlage verbunden ist, welche dazu ausgebildet ist, ein Softwareprogramm auszuführen, das, wenn es von der Datenverarbeitungsanlage ausgeführt wird, den Roboter dazu veranlasst, ein Verfahren gemäß einem der Beispiele 1 bis 72 auszuführen.

## Patentansprüche

1. Verfahren zur Steuerung wenigstens eines autonomen mobilen Roboters (100), insbesondere eines Reinigungsroboters mit einer Reinigungseinheit zur Reinigung einer Bodenfläche, wobei der wenigstens eine Roboter (100) dazu ausgebildet ist, eine Aufgabe zu einem vorgegebenen Zeitpunkt in einem Einsatzgebiet durchzuführen, wobei das Verfahren aufweist:
Festlegen von allgemeinen Planungsvorgaben, wobei die allgemeinen Planungsvorgaben eine Aktivität des wenigstens einen Roboters (100) betreffen; und
automatisches Planen von Zeitpunkten, zu welchen eine Aufgabe durchgeführt werden soll, wobei die Planung unter Berücksichtigung der allgemeinen Planungsvorgaben erfolgt, wobei
die allgemeinen Planungsvorgaben vorsehen, dass zu bestimmten vorgebbaren Zeitpunkten oder Zeiträumen keine Aufgaben automatisch geplant und durchgeführt werden.

2. Verfahren gemäß Anspruch 1, wobei die allgemeinen Planungsvorgaben wenigstens einen Aktivitätsmodus aufweisen und wobei der wenigstens eine Aktivitätsmodus wenigstens eines der folgenden aufweist:
einen Arbeitsmodus, wobei wenigstens einer der Roboter (100) dazu ausgebildet ist, während er in dem Arbeitsmodus ist, autonom die in dem entsprechenden Zeitraum vorliegenden Arbeitsaufträge zu planen und abzuarbeiten;
einen Bereitschaftsmodus, wobei wenigstens einer der Roboter (100) dazu ausgebildet ist, während er in dem Bereitschaftsmodus ist, keine Arbeitsaufträge automatisch zu planen und abzuarbeiten und nur auf Anweisung des Nutzers anfallende Arbeitsaufträge zu planen und abzuarbeiten; und
einen Schlafmodus, wobei wenigstens einer der Roboter (100) dazu ausgebildet ist, während er in dem Schlafmodus ist, keine Arbeitsaufträge zu planen und abzuarbeiten.

3. Verfahren gemäß Anspruch 2, wobei der wenigstens eine Roboter (100) dazu ausgebildet ist, wenigstens eines von
zu bestimmten vorgebbaren Zeitpunkten aus einem Aktivitätsmodus in einen anderen Aktivitätsmodus zu wechseln; und
als Reaktion auf ein bestimmtes vorgebbares Ereignis hin aus einem Aktivitätsmodus in einen anderen Aktivitätsmodus zu wechseln.

4. Verfahren gemäß Anspruch 3, wobei das vorgebbare Ereignis wenigstens eines aufweist von:
Entfernen des Nutzers vom Einsatzgebiet;
Zurückkehren des Nutzers zum Einsatzgebiet;
Einschlafen des Nutzers; und
Aufwachen des Nutzers.

5. Verfahren gemäß Anspruch 3 oder 4, wobei eine Aufgabe eines Roboters abgebrochen oder unterbrochen wird, wenn der entsprechende Roboter während der Durchführung der Aufgabe auf ein Ereignis hin aus dem Arbeitsmodus in den Bereitschaftsmodus oder den Schlafmodus wechselt.

6. Verfahren gemäß Anspruch 5, wobei, wenn bei einem Wechsel des Roboters (100) in den Arbeitsmodus eine abgebrochene Aufgabe vorliegt, das Verfahren weiterhin aufweist:
Prüfen ob die abgebrochene Aufgabe sofort oder zu einem späteren Zeitpunkt wiederholt oder fortgeführt werden soll.

7. Verfahren gemäß Anspruch 6, wobei das Prüfen ob die abgebrochene Aufgabe sofort oder zu einem späteren Zeitpunkt wiederholt oder fortgeführt werden soll aufweist:
Prüfen, ob während eines bestimmten vorgebbaren Zeitraumes, welcher auf den Wechsel in den Arbeitsmodus folgt, eine Aufgabe geplant ist, welche der abgebrochenen Aufgabe zumindest teilweise entspricht; und
Löschen und Unterlassen der abgebrochenen Aufgabe, wenn während des bestimmten vorgebbaren Zeitraumes, welcher auf den Wechsel in den Arbeitsmodus folgt, eine Aufgabe geplant ist, welche der abgebrochenen Aufgabe zumindest teilweise entspricht.

8. Verfahren gemäß einem der Ansprüche 1 bis 7, wobei der Roboter (100) während der Durchführung einer Aufgabe wenigstens eine Ressource verbraucht und wobei das Verfahren weiterhin aufweist:
automatisches Planen von Zeitpunkten, zu welchen wenigstens eine Ressource aufgefüllt werden soll, wobei die Planung unter Berücksichtigung der allgemeinen Planungsvorgaben erfolgt.

9. Verfahren gemäß Anspruch 8, wobei
das Auffüllen der wenigstens einen Ressource das Aufladen eines Akkus des wenigstens einen Roboters (100) aufweist,
die Geschwindigkeit der Aufladung des Akkus von einem gewählten Ladeprogramm abhängt, und
das Wählen des Ladeprogramms in Abhängigkeit der allgemeinen Planungsvorgaben erfolgt.

10. Verfahren gemäß Anspruch 9,
wobei der Roboter ein Schonladeprogramm zur schonenden Ladung des Akkus besitzt, und
wobei das Schonladeprogramm vom Aktivitätsmodus des Roboters und insbesondere in einem Schlafmodus gewählt wird.

11. Verfahren gemäß einem der Ansprüche 1 bis 10,
ferner umfassend die Schritte:
Feststellen, dass die Verrichtung einer Teilaufgabe in eine Zeit fallen würde, zu der der Roboter keine Aufgabe mehr verrichten soll; und
Verschieben der Teilaufgabe auf den nächsten möglichen Zeitpunkt.

12. Verfahren gemäß einem der Ansprüche 1 bis 11 und insbesondere zumindest nach Anspruch 2,
ferner umfassend die Schritte:
Feststellen, durch Variation der Reihenfolge der Abarbeitung von Teilaufgaben und der hiermit verbundenen Ladepausen, dass ein Ausführen einer Teilaufgabe dazu führt, dass die hiermit verbundene Ladepause mit einem vom Nutzer gewählten Zeitintervall eines Schlafmodus stark überlappt; und
Produktives Nutzen der Zeit des Schlafmodus, indem eine Ressource des Roboters aufgeladen wird.

13. Verfahren gemäß einem der Ansprüche 1 bis 12 und insbesondere zumindest nach Anspruch 2,
wobei mit dem Wechsel in den Bereitschaftsmodus der Roboter eine Reinigung unterbricht und auf einen späteren Zeitpunkt verschiebt, wenn der Arbeitsmodus wieder aktiv wird.

14. Verfahren nach einem der vorhergehenden Ansprüche,
wobei geeignete Zeitpunkte für das Senden von Erinnerungen an den Nutzer in einem elektronischen Kalender gespeichert werden.

15. Autonomer Roboter, insbesondere Reinigungsroboter mit einer Reinigungseinheit zur Reinigung einer Bodenfläche, der mit einer internen und/oder externen Datenverarbeitungsanlage verbunden ist, welche dazu ausgebildet ist, ein Softwareprogramm auszuführen, das, wenn es von der Datenverarbeitungsanlage ausgeführt wird, den Roboter dazu veranlasst, ein Verfahren gemäß einem der Ansprüche 1 bis 14 auszuführen.
